# EUROPEAN PATENT SPECIFICATION

(11) **EP 2 494 740 B1**
(45) Date of publication and mention of the grant of the patent: **03.12.2014**
(21) Application number: 09752148.8
(22) Date of filing: 30.10.2009
(51) Int. Cl.: H04L 12/28, G06F 17/30

(54) **DEVICE SELECTION FOR MEDIA RENDERING**
GERÄTEAUSWAHL FÜR MEDIEN-RENDERING
SÉLECTION DE DISPOSITIF POUR RENDU MULTIMÉDIA

(43) Date of publication of application: 05.09.2012
(73) Proprietor: Telefonaktiebolaget LM Ericsson (publ), 164 83 Stockholm (SE)
(72) Inventor: YASUKAWA, Kenta, Tokyo 179-0076 (JP); WOXBLOM, Mikael, 12542 Älvsjö (SE)
(74) Representative: Egrelius, Fredrik
(86) International application number: PCT/EP2009/064369
(87) International publication number: WO 2011/050852

(56) References cited:
- EP-A1- 1 845 683
- US-A1- 2009 248 788

## Description

### TECHNICAL FIELD

The present invention generally relates to distribution of media content in a communication system, and in particular to selecting a device at which ordered media content is delivered and rendered.

### BACKGROUND

Media consumption has increased tremendously over the last few years. Today, users can download or stream media in various forms, such as video and audio data, to their computers and mobile telephones for consumption and rendering therein. The traditional approach of such media content delivery and rendering has been to visit a web page of a content provider by a web browser implemented in the computer or mobile telephone. The user selects a particular media content that is available at the content provider to download or stream the media content to the computer or mobile telephone for rendering therein.

If the user, however, would like to consume the selected media content on another user device or terminal than the one that was used to order the media content, he or she generally has to perform a number of manual steps which are cumbersome or sometimes difficult. In particular, the user has to download the media content using the computer or mobile telephone and then transfer it to the device he or she would like to use for conducting the actual play back or rendering of the media. Additional problems can also occur in terms of the need for transcoding the media content into a suitable format that is required by the selected media rendering device.

There is therefore a need for a solution of providing an efficient delivery of media content to a media rendering device that can be different from the user terminal used for selecting and ordering media. Such a solution is in particular desired in the light of the emerging trend of providing media consumption in local networks as standardized by the Digital Living Network Alliance (DLNA), where DLNA compatible user equipment and devices are able to communicate with each other via Universal Plug and Play (UPnP) and share media between the devices.

Document US2009/0248788 discloses a method of enabling media rendering (SIP-based video telephony) at a media rendering device available for a user and present in a local network (e.g. home network) connected to a global network (e.g. wide area network).

### SUMMARY

It is a general objective to enable delivery a of media content to a media rendering device present in a local network.

It is a particular objective to enable ordering of media content at a user terminal but delivery of the media content to a media rendering device in the local network.

These and other objectives are met by embodiments as disclosed herein.

Briefly, media rendering at a media rendering device available for a user and present in a local network connected to a global network is enabled by providing a link converting module connected to the global network. This link converting module receives media information relating to media content available at a content provider. The media information comprises links to the media contents, which are processed by the link converting module in terms of replacing the links with converted links instead directed towards a device selecting module. The media information with the converted links replacing the original media content links is sent to a user interface module implemented in a user terminal connected to the global network. The user selects a particular media content available at the content provider by activating one of the converted links. An activation command comprising the corresponding link and a user identifier is generated and transmitted to the device selecting module. The device selecting module employs the user identifier for providing a device identifier of a selected media rendering device accessible to the user and present in the local network. A media fetching command comprising the media content link and the device identifier is generated and transmitted destined to the selected media rendering device. The media rendering device can thereby access the media content through the received link to receive, decode and render the media content in the local network.

Another embodiment of the method of enabling media rendering at a media rendering device involves intercepting a media request by a request redirecting module connected to the global network. The media request comprises a user identifier and a link to a media content available at a content provider. The user interface module of the user terminal has generated the media request and transmitted it towards the content provider when the request redirecting module intercepts the media request. An activation command comprising the user identifier and the media content link is generated and transmitted to the device selecting module. The following operation procedures of the method are the same as described above.

A system for enabling media rendering in a rendering device comprises the link converting module and the device selecting module in an embodiment. The link converting module comprises a receiver configured to receive the media information with the media content links. A link converter replaces the media content links by converted links instead addressing the device selecting module. The media information with the converted links is transmitted by a transmitter of the link converting module to the user interface module of the user terminal. The device selecting module comprises a receiver configured to receive the activation command originating, in this embodiment, from the user interface module. An identifier provider retrieves the user identifier included in the activation command and provides a device identifier of a selected media rendering device based on the user identifier. A media fetching command comprising the media content link from the activation command and the device identifier is compiled by the device selecting module and transmitted to a service provider for further forwarding to the selected media rendering device.

In another embodiment, the link converting module is replaced by a request redirecting module comprising a receiver configured to intercept a media request from the user interface module and destined to the content provider. An activation command generator retrieves the media content link and the user identifier from the media request and compiles an activation command that is transmitted to the device selecting module.

Embodiments thereby allow a user to direct media contents on any arbitrary content provider to a media rendering device associated with the user and present in a local network instead of rendering the media content on the user terminal employed for ordering the media content.

### BRIEF DESCRIPTION OF THE DRAWINGS

The invention, together with further objects and advantages thereof, may best be understood by making reference to the following description taken together with the accompanying drawings, in which:
Fig. 1 is a schematic overview of a communication system according to an embodiment;
Fig. 2 is a schematic overview of a communication system according to another embodiment;
Fig. 3 is a schematic overview of a communication system according to a further embodiment;
Fig. 4 is a flow diagram illustrating a method of enabling media content rendering according to an embodiment;
Fig. 5 is a signal diagram illustrating a method of enabling media content rendering according to an embodiment;
Fig. 6 is a signal diagram illustrating a method of enabling media content rendering according to another embodiment;
Fig. 7 is a flow diagram illustrating a method of enabling media content rendering according to another embodiment;
Fig. 8 is a signal diagram illustrating a method of enabling media content rendering according to a further embodiment;
Fig. 9 is a signal diagram illustrating a method of enabling media content rendering according to yet another embodiment;
Fig. 10 is a signal diagram illustrating a portion of the method of enabling media content rendering according to an alternative embodiment;
Fig. 11 is a signal diagram illustrating a portion of the method of enabling media content rendering according to another alternative embodiment;
Fig. 12 schematically illustrates a web browser presenting media information;
Fig. 13 schematically illustrates presentation of media rendering devices;
Fig. 14 is a schematic block diagram of a system for enabling media content rendering according to an embodiment;
Fig. 15 is a schematic block diagram of a system for enabling media content rendering according to another embodiment;
Fig. 16 is a schematic block diagram illustrating an implementation example of the system for enabling media content rendering; and
Fig. 17 is a schematic block diagram illustrating another implementation example of the system for enabling media content rendering.

### DETAILED DESCRIPTION

Throughout the drawings, the same reference numbers are used for similar or corresponding elements.

Embodiments as disclosed herein relates to distribution of media content in a communication system and in particular to enabling selection of media rendering device to which the media content is delivered and rendered or played.

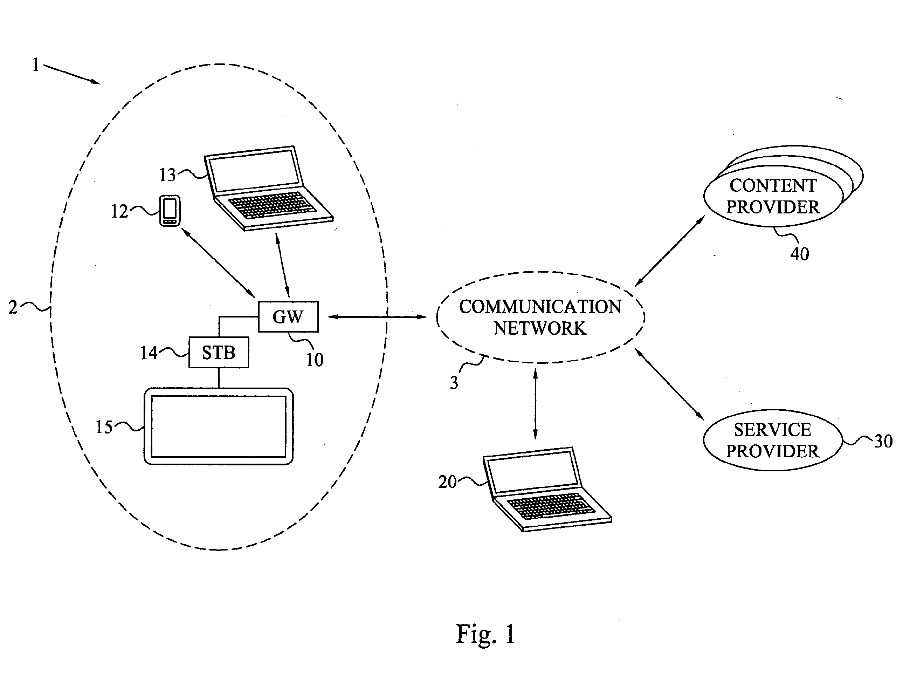

With reference to Fig. 1, the traditional approach in media content distribution has been to visit a web page of a content provider 40 using a web browser implemented in a user terminal 20, such as computer or mobile telephone. The user selects the particular media content, which is downloaded or streamed from the content provider 40 using a wired or wireless communication network 3 into the user terminal 20.

The embodiments instead allow the user to select media content from any content provider 40 connected to a global network 3 but where the selected media content is instead delivered, such as streamed, downloaded or pushed, to a media rendering device 12, 13, 14 present in a local network 2 connected to the global network 3. Thus, the actual media rendering and playing can therefore take place in a media rendering device 12, 13, 14 that is different from the user terminal 20 used for selecting the particular content. As a consequence, no manual transfer of the media content from the user terminal 20 to the relevant media rendering device 12, 13, 14 is required by the user. Instead an automatic delivery of the media content from the content provider 40 to the media rendering device 12, 13, 14 is possible.

The communication system 1 illustrated in Fig. 1 comprises the global network 3 to which the user terminal 20 and the content provider 40 are connected. The global network 3 can be a non-managed or open network, typically denoted Open Internet in the art. Alternatively, the global network 3 can be or comprise a managed or proprietary network operated by a network operator. In either case, the global network 3 houses or is connected to one or more content providers 40 having access to media content that is to be distributed to media rendering devices 12, 13, 14 present in the local network 2. These content providers 40 can be network-arranged, dedicated content providers or indeed represent consumer generated media in the form of media available from other users in their respective local networks. The advantages of the embodiments is that media content selection and distribution can be achieved from any content provider 40 connected to the global network 3. As a consequence, the user is not limited to select only among media content available at a service provider 30 but the techniques presented herein instead open up for a vastly larger pool of content providers 40 that not necessarily have to have a distribution agreement with the service provider 30.

This is advantageous since even if the service provider 30 can provide a wide coverage for a broad set of media contents, it cannot cover everything that each and every user may want. There can also be the situation with content providers 40 who do not want to collaborate with the service provider 30, e.g. Sony music entertainment has not offered their contents on Apple's iTunes Music store. Moreover, in case of user generated contents, it will be impossible for a service provider 30 to cover all such user generated media content.

The embodiments solve these problems by enabling selecting of media content from any connected content provider 40 and the distribution of the content to a selected media rendering device 12, 13, 14 present in a local network associated or accessible to the media selecting user.

The local network 2 is sometimes denoted local area network (LAN), personal network, personal area network (PAN) but is also known in the art under other names such as home network, residential network or consumer network. In some embodiments, the local network 2 can be based on Ethernet or one of the existing wire home networking technologies, such as Home Phoneline Networking Alliance (HomePNA) or the Telecommunication Standardization Sector (ITU-T) G.hn standard, which provides a possibility of creating high-speed LAN using existing home wiring. Other examples include different LAN solutions to enable delivery of media content over IP and the customer's broadband connection, such as Asymmetric Digital Subscriber Line (ADSL), Very high-rate Digital Subscriber Line (VDSL), Public Ethernet, etc. Also wireless network solutions can be used to establish the local network, including combinations of wired and wireless techniques.

The media rendering devices 12, 13, 14 of the local network 2 are generally interconnected to the global network 3 through a gateway (GW) 10 providing an interface between the two networks 2, 3. This gateway 10 operates in a similar way to a router in terms of forwarding data from the local network 2, such as media content requests, to the global network 3 and forwarding data from the global network 3, such as media fetching commands and the actual media content, to the local network 2.

The media rendering devices 12, 13, 14 are advantageously DLNA compatible devices. The media rendering devices 12, 13, 14, can consequently perform the roles of Digital Media Player (DMP), Mobile DMP (M-DMP) or Digital Media Renderer (DMR). A DMP, M-DMP or DMR is a media rendering device that provides playback and rendering capabilities. TVs, stereos, home theatres, wireless monitors, game consoles, mobile phones and mobile media tables are illustrative examples of media rendering devices 12, 13, 14 that can operate as DMP, M-DMP or DMR. The figure illustrates an example of a local network 2, in which a mobile telephone 12, a computer 13 and a set top box (STB) 14 with connected TV-screen 15 are presented as illustrative but non-limiting example of media rendering devices.

In the following media content should be interpreted broadly to encompass multimedia and media data, such as video, audio, text, graphics, data delivered over IP based networks to a media rendering device 12, 13, 14 in a local network 2, where local processing, i.e. rendering and/or play back of the media content is effected.

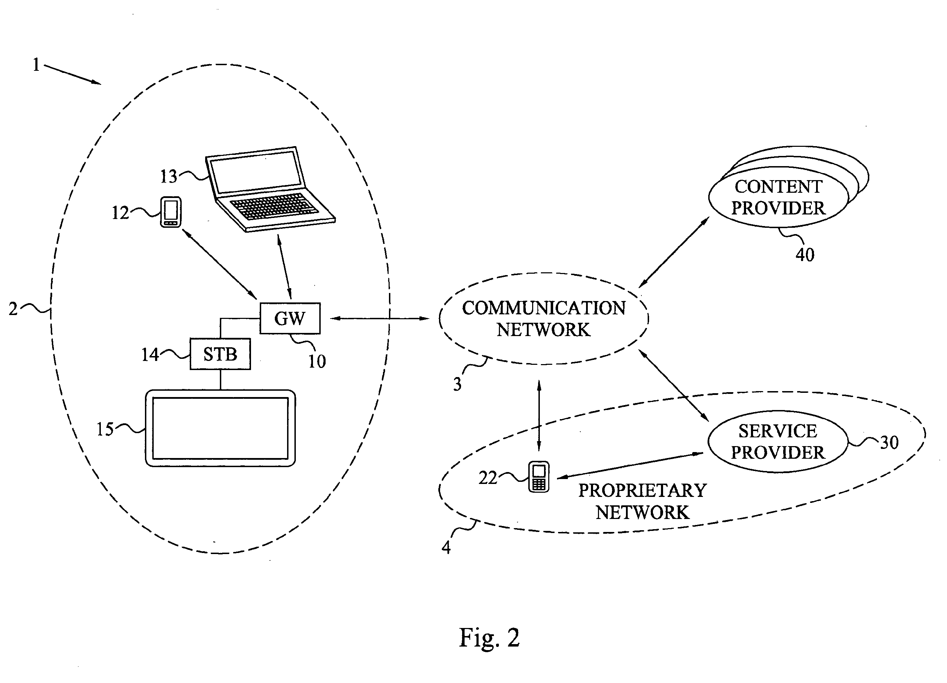

Fig. 2 illustrates an alternative layout of the communication system 1. In this case, the user terminal 22 employed for selecting the particular media content at a content provider 40 is represented by a mobile telephone 22 connected to a proprietary network 4 operated by a network operator. In the illustrative example, the service provider 30 is also provided in the proprietary network 4, which in turn is connected to the global network 3, typically Internet in this example.

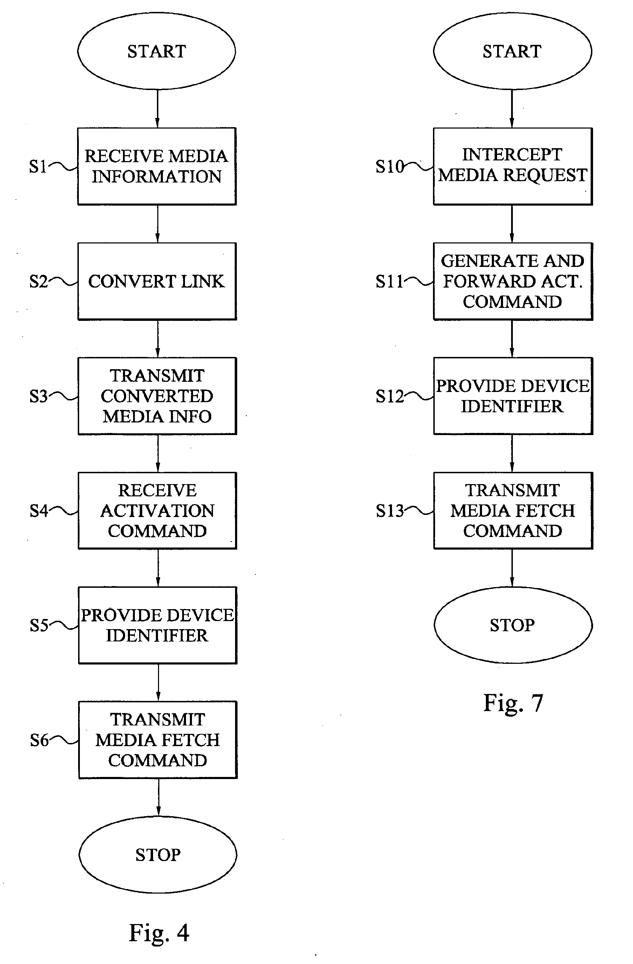

Fig. 4 is a flow diagram illustrating a method of enabling media rendering at a media rendering device available for a user and present in a local network connected to a global network, for instance as illustrated in Figs. 1 or 2. The method starts in step S1, where a link converting module, processor or device connected to the global network receives media information. The media information relates to and identifies at least one media content available at a content provider connected to the global network. The media information comprises a link to the media content at the content provider and preferably a respective link to each media content announced in the media information and available at the content provider. In a particular embodiment, the media information comprises the data of a web page or site that is displayable by a user interface module, such as a web browser, implemented and run in a user terminal.

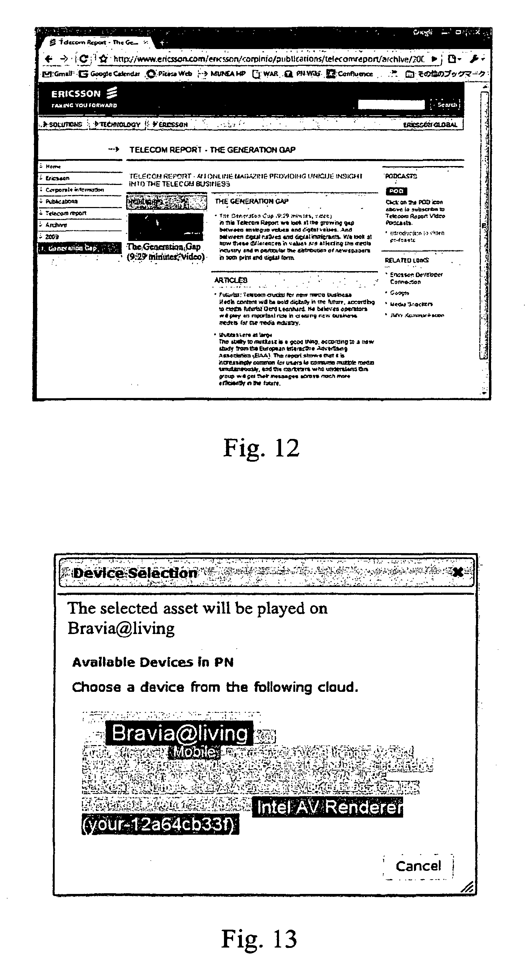

Fig. 12 schematically illustrates an example of such a web page or document that can constitute media information according to the embodiments. The web page comprises a link to a particular media content "The Generation Gap", associated with a particular video content.

The media information can, in this embodiment, actually represent any information or data that can be processed by the user interface module, such as web browser, to display information to the user of the user terminal of at least one media content available at a content provider from which media information originates.

A next step S2 converts the link in the media information to the media content at the content provider into a converted link. The converted link is instead to a device selecting module, processor or device. Thus, instead of being associated with and addressing the media content at the media server as the original link, the converted link instead, if activated, addresses and calls the device selecting module.

In a particular embodiment of the converting step S2, the media information is parsed through to identify any links to media contents available at the content provider. Each such identified link is then replaced by a respective converted link to the device selecting module.

The link conversion can, for instance, be implemented by converting an original hyper link to the media content with a Javascript function call comprising information of the hyper link. Thus, it is preferably possible to retrieve the original address information of the media content available from the content provider from the converted link. For example, the link: <a ref=http://cp.com/music.mp3>Click here to play music</a> is replaced by <a onClick="new DeviceSelectingModule('http://cp.com/music.mp3'); return false;" href="javascript:void(0)">Click here to play music</a>.

In HTML 5 special tags are defined for media contents on a document, e.g. <video> and <audio> for video and audio content, respectively. In such a case, it is not necessary to detect the file names of each hyper link on the document. Instead, the tags can be used to identify links relating to media content available at the content provider.

The media information received in step S1 and the converted link(s) from step S2 are used to generate converted media information. In a preferred embodiment, the converted media information is obtained by replacing the original link(s) or address(es) in the media information with the converted link(s) or converted address(es) from step S2. In either case, the converted media information is transmitted in step S3 to the user interface module implemented in the user terminal, such as computer 20 or mobile telephone 22 as illustrated in Figs. 1, 2. The transmission of step S3 is typically implemented by forwarding the converted media information from the link converting module, implemented in the user terminal, to the user interface module, also implemented in the user terminal in this embodiment.

The converted media information is processed by the user interface module and displayed at a display screen of the user terminal to the user. The user can therefore be presented by the web page as illustrated in Fig. 12. Note that the user is preferably not aware of any conversion of the links to the converted links. Instead this is hidden from the user and is only present in script of the presented document. Thus, the user is presented by information of the media content that is available from the content provider and preferably by presenting a web page that comprises at least one link that identifies the media content as illustrated in Fig. 12.

The user selects the particular media content that he/she would like to receive, preferably by clicking on the link defining the particular media content of the displayed web page. Any link activation process known in the art besides clicking on the link with a mouse, using a touch sensitive screen or joystick can be used and depends on the particular user terminal design. Activation of the link causes an automatic generation of an activation command comprising information of the original link that had been converted in step S2. In a preferred embodiment, the activation command actually comprises the complete original link itself as it is preferably retrievable from the converted link. Additionally, the activation command comprises an identifier of the user of the user terminal. This identifier could be a predefined user name previously assigned to the user and stored in the user terminal. Alternatively, any device identifier allowing identification of the user terminal could be used as user identifier. Actually any identifier allowing identification of the user for the purpose of identifying, as will be described further herein, at least one media rendering device accessible for the user in the local network 2 can be used in the activation command.

The activation command is transmitted from the user interface module to the device selecting module in step S4. Thus, by converting the link in step S2, a user-triggered activation of the converted link will send the activation command to the device selecting module instead of generating and transmitting a media request to the content provider.

The device selecting module uses the user identifier in the activation command for providing in step S5 a device identifier of a selected media rendering device available for the user and present in the local network. The selected media rendering device represents the device in the local network to which the selected media content should be delivered and where the actual rendering is taking place.

The device identifier of the selected media rendering device from step S5 is used together with the information or link of the selected media content for generating and transmitting a media fetching command in step S6. The media fetching command is further destined to the selected media rendering device identified by the device identifier. Thus, the device identifier is used to identify the particular media rendering device to which the media fetching command is destined and the link is included in the media fetching command, to allow the media rendering device, upon reception of the link to access the media content at the content provider to thereby request the media content therefrom for rendering at the media rendering device. The method then ends.

Embodiments of the method illustrated in Figs. 4 thereby allows the selection of a media content at any content provider connected to the global network irrespective of any collaboration or agreement with a content service provider. Additionally, the selected media content is delivered at a media rendering device selected and present in the local network of the user. However, the actual ordering or selection of the media content performed using the user terminal can thereby take place anywhere as long as the user terminal is directly (Fig. 1) or indirectly (Fig. 2) connected to the global network. For instance, a user currently working at his/her office can select and redirect the distribution of a video to his/her set top box present at home. The user terminal employed for selecting the particular media content does not need to be present in the local network, even though this of course possible.

Embodiments further do not limit the delivery of the selected media content to the local network of the ordering user but can actually be used for enabling the user to order and distribute media content to his/her friends. Thus, as long as the user is granted access to the identifier of the particular friend and can log in to get information of the media rendering devices of the friend, the method can be used to enable selection of media content at a user terminal of a first user but the actual delivery of the content to a media rendering device in a local network of a second user.

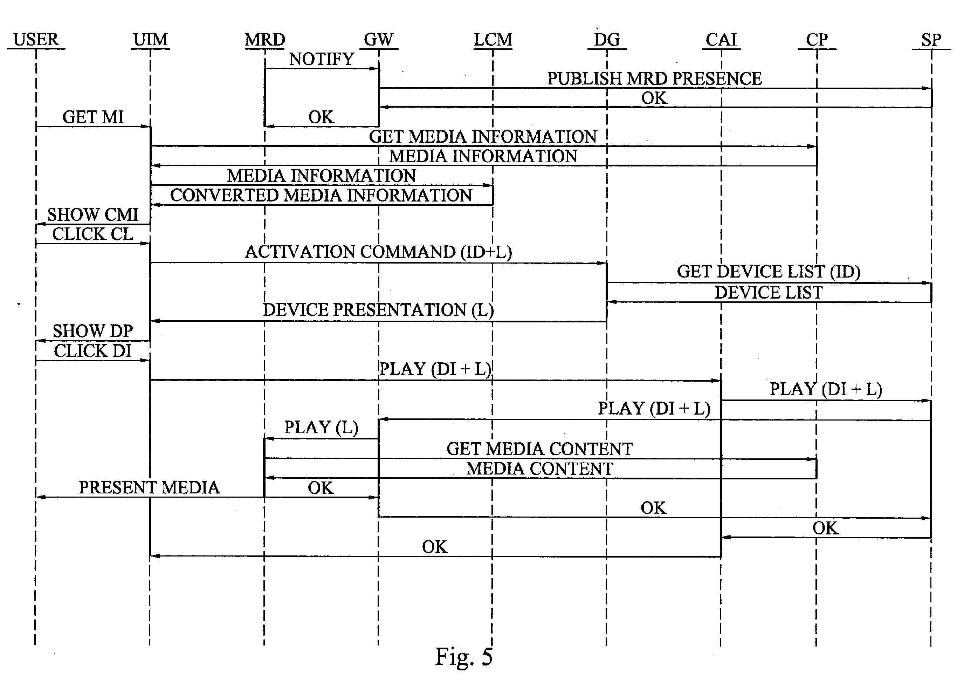

Fig. 5 is a signal diagram illustrating a detailed implementation example of the method of enabling media rendering at a media rendering device (MRD) according to an embodiment. With reference to Figs. 1 and 5, the method optionally begins by the media rendering device (MRD) 12, 13, 14 notifying or announcing its presence to a service provider (SP) 30 using its connected gateway (GW) 10. The gateway 10 thereby publishes the presence of the media rendering devices 12, 13, 14 to the service provider 30, preferably by transmitting respective device identifiers or other device-specific information to the service provider 30. The service provider 30 typically returns with a confirmation or OK response that is forwarded by the gateway 10 to the particular media rendering device 12, 13, 14. The presence publication allows the service provider 30 to keep and update a list of media rendering devices 12, 13, 14 that are present in a local network 2 and associated with and accessible for one or more users. Publication of the presence of media rendering device 12, 13, 14 is typically only conducted once for each media rendering device 12, 13, 14 in connection with connecting it the first time to the local network 2. The list of media rendering devices 12, 13, 14 includes, for instance, name and IP number of the respective media rendering devices 12, 13, 14. The list is further associated with an identifier allowing a user to get access of information of his/her media rendering devices 12, 13, 14. The identifier is preferably the previously mentioned user identifier.

When a user wants to order media content from a content provider (CP) 40, he/she uses his/her user terminal 20 and the user interface module (UIM), such as web browser or other program module that allows accessing the content provider 40. In a typical embodiment, the user types in the web page of the content provider 40 in the user interface module to thereby request media information (MI) from the content provider 40. The content provider 40 returns the requested media information, such as in the form of a web page or document allowing display of a web page in the user interface module. The received media information is in this embodiment forwarded to a link converting module (LCM) preferably implemented in the user terminal 20. The link converting module converts link to media content at the content provider 40 into converted links (CL) that are instead directed towards a dialogue generator (DG) forming part of a device selecting module in this implementation example. The media information with the links replaced by the converted link constitute converted media information (CMI), which is returned to the user interface module for display on the display screen of the user terminal 20.

The user then clicks on one of the converted links in the displayed converted media information to thereby automatically generate an activation command comprising the corresponding link (L) that have been converted into the selected and clicked link by the link converting module. The activation command additionally preferably comprises an identifier (ID) of the user. Since the converted link is constructed to redirect the activation command to the dialog generator, the generator receives the identifier and uses the identifier included therein for composing a device identifier request. The device identifier request is sent from the dialog generator to the service provider 30. The service provider 30 retrieves the identifier from the request and compiles, in this embodiment, a list of the media rendering devices 12, 13, 14 that has previously been announced as available for the particular user. A device list comprising device identifiers of the media rendering devices 12, 13, 14 is generated and returned to the dialog generator. The local network 2 can comprise a single media rendering device 12, 13, 14 accessible for the user but preferably comprises multiple, i.e. at least two, media rendering devices 12, 13, 14 to select among. The device list then comprises a respective device identifier for each of the media rendering devices 12, 13, 14.

The device list may optionally include preference or priority information relating to the available media rendering devices. The preference information thereby indicates the respective preferred level of each media rendering device 12, 13, 14 and can be determined based on various input information. For instance, the service provider 30 can use information of the actual media content, e.g. by including the link or information of the media content addressed by the link in the device identifier request. The information is used by the service provider 30 to identify the media rendering device(s) 12, 13, 14 in the local network 2 that is best suited for rendering the media content. For instance, audio content is preferably played or rendered by a music player, mp3 player or stereo, whereas a set top box advantageously is used for rendering video content. Additional information that can be used for determining the preference level can be based on past history of selected media rendering devices 12, 13, 14. Thus, information of the particular media rendering devices selected in past media sessions can be used to determine preferences of media rendering devices 12, 13, 14.

A device presentation message is compiled by the dialog generator and comprises the device list or at least the device identifiers included in the device list and optionally the preference information. The device presentation message preferably also comprises the link to the selected media content. The device presentation message is transmitted to the user interface module for display on the display screen of the user terminal 20. An example of achieving device preference in the presentation of the media rendering devices is illustrated in Fig. 13. Fig. 13 illustrates such device presentation based on tag cloud to express how suitable a media rendering device is, i.e. the larger the display of the device identifier the more appropriate the media rendering device is for the user's current session.

In another embodiment, the device presentation can be a simple listing of the device identifiers or other information allowing identification of the available media rendering devices. In such a case, any preference levels can be implemented by listing the most suitable media rendering devices first and then in declining preference order in the device list.

Each item in the device presentation preferably works as a link. The user consequently clicks on one of the presented device identifiers (DI), which triggers forwarding information of the selected media rendering device and the link to a control application programming interface (API) invoker (CAI), which constitutes a part of the device selecting module. The control API invoker uses the device identifier and the link for compiling and transmitting a media fetching command (play) that is transmitted to the service provider 30. The service provider 30 transmits the media fetching command to the gateway 10 of the local network 2, which forwards the link to the media rendering device 12, 13, 14 identified by the device identifier.

The media rendering device 12, 13, 14 requests the content by accessing the received link to thereby transmit a media request to the content provider 40. This media request could be automatically generated by the media rendering device 12, 13, 14 upon receiving the link from the gateway 10. Alternatively, the media rendering device 12, 13, 14 displays on its display screen or a connected display screen 15 information to a user that media content is now available and can be fetched by the media rendering device 12, 13, 14. The user then confirms that the media content should be accessed, for instance by clicking on a button, touch-sensitive screen or other user input of the media rendering device 12, 13, 14. The confirmation causes the generation of the media request.

The content provider 40 delivers the media content to the requesting media rendering device 12, 13, 14, which starts decoding and rendering the media content, such as playing video content and/or audio content. Additionally, the media rendering device 12, 13, 14 preferably informs the gateway 10 that it has now successfully started receiving the media content. The gateway 10 in turn confirms to the service provider 30 that media content delivery has started. This confirmation is further forwarded to the control API invoker and preferably ultimately to the user interface module.

In the embodiments illustrated in Figs. 1 and 2, the user interface module, the link converting module and the link selecting module with the preferred dialog generator and the control API invoker are preferably all implemented in the user terminal 20, 22, which is further described herein.

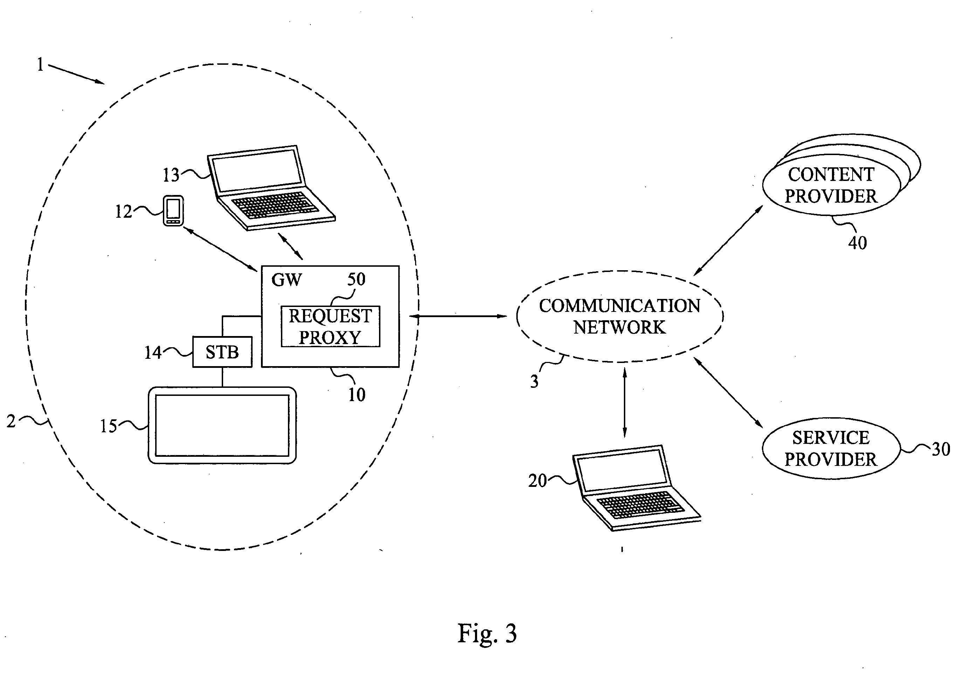

Fig. 3 illustrates another possible communication system 1 with a request proxy 50 that preferably implements the link converting module. The request proxy 50 can be implemented in the local network 2, such as in the gateway 10 constituting an interface between the local network 2 and the global network 3. In an alternative embodiment, the request proxy 50 forms part of the global network 3 and can therefore be present in a network node of the global network 3. In particular, the request proxy 50 can be implemented in a communication system 1, in which the service provider 30 is connected to or implemented in a proprietary network as illustrated in Fig. 2. The request proxy 50 then advantageously constitutes parts of a proxy server or proxy node in the proprietary network.

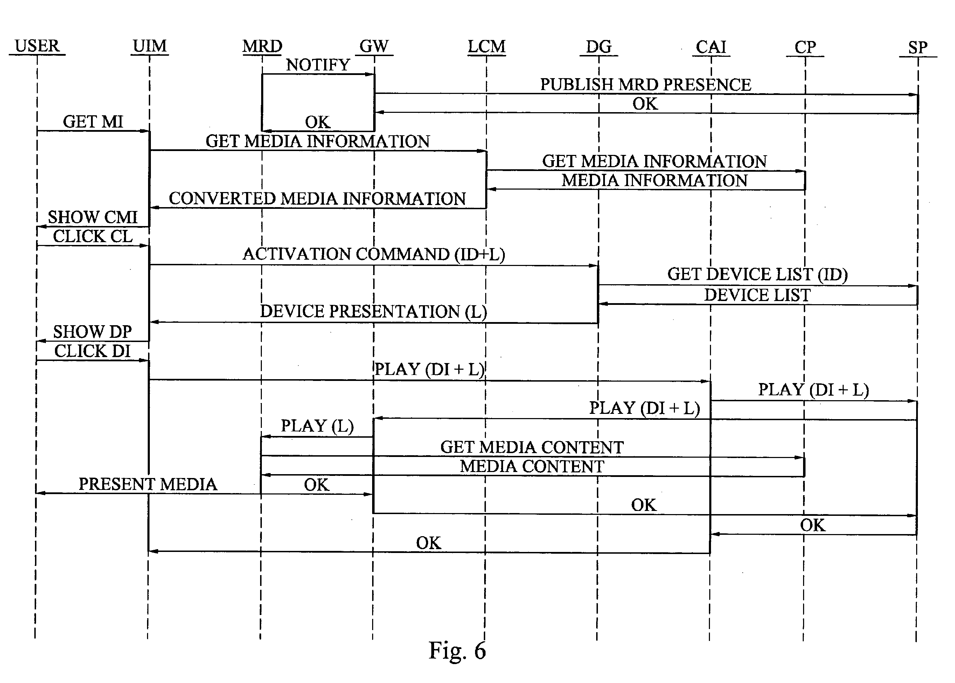

Fig. 6 is a signal diagram illustrating another implementation example of a method of enabling media rendering at a media rendering device. The implementation embodiment is adapted for having the link converting module implemented in the request proxy 50, whereas the dialog generator and the control API invoker of the device selecting module are preferably implemented together with the user interface module in the user terminal 20.

The signaling is preferably started in the same way as in Fig. 5 with the optional media rendering device presence publication. The user then requests media information from the content provider by means of the user interface module in the user terminal 20. The request for media information first arrives at the link converting module present in the request proxy and is then forwarded to the content provider 40. The requested media information is returned to the link converting module, which parses through the media information and replaces all links to media content with converted links as previously described. The resulting converted media information with the converted links is transmitted to the user interface module.

The remaining signaling in this implementation embodiment is conducted in the same way as in Fig. 5.

In the above described implementation embodiments, the link converting module receives the media information with any links and processes the information to get the converted media information with the converted links to the device selecting module instead of to the content provider. Fig. 7 is a flow diagram illustrating another embodiment of the method of enabling media rendering at a media rendering device available for a user and present in a local network connected to a global network. The method starts in step S10, where a request redirecting module, processor or device intercepts a media request from a user interface module implemented a user terminal connected to the global network. The intercepted media request originates from the user interface module and is destined to a content provider. The media request comprises a link to a media content available at the content provider and an identifier of the user.

In a preferred embodiment, the media request has been generated by previously accessing a web page or site of the content provider using the user interface module of the user terminal. Media information in the form of the web page is received and displayed at the user terminal. The user then selects the particular media content it would like to distribute to a media rendering device, preferably by clicking on a link in the displayed media information. The user-triggered activation of the link generates the media request that is intercepted by the request redirecting module in step S10. In this embodiment no link conversion is thereby needed.

An activation command is generated in step S11 by the request redirecting module. The activation command comprises the link or identifier allowing identification of the media content at the content provider and the identifier of the user. The activation command is transmitted to a device selecting module connected to the global network. The following two steps S12 and S13 are conducted in the same way as steps S5 and S6. This means that the device selecting module provides information of a selected media rendering device available for the user in the local network based on the user identifier in step S12. A media fetching command comprising the link or information of the media content and the device identifier of the selected media rendering device is transmitted in step S13 and is destined to the selected media rendering device. The method then ends.

The difference between the embodiments in Figs. 4 and 7 is that in the embodiment of Fig. 4, the media information is intercepted or transmitted to the link converting module for processing in terms of exchanging links to media content to converted links addressing the device selecting module. In the embodiment of Fig. 7, a request redirecting module instead intercepts a media request from the user interface module and processes and can be said to redirect the media request to the device selecting module in terms of generating and transmitting the activation command based on information included in the intercepted media request.

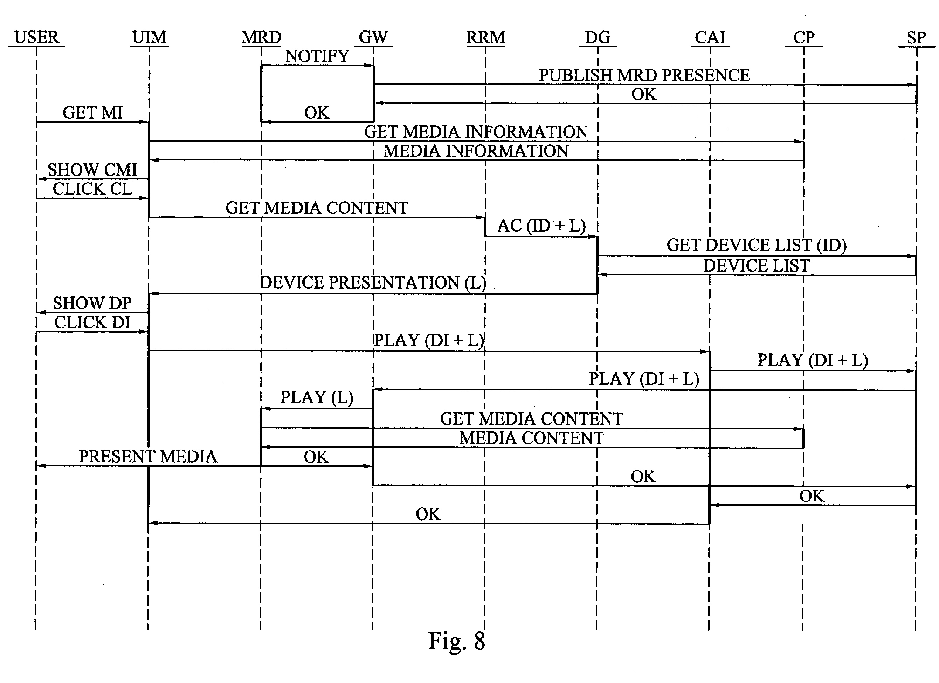

Fig. 8 is a signal diagram illustrating an implementation example of the method illustrated in Fig. 7. An optional publication of media rendering device presence can be conducted in similarity to Figs. 5 and 6. The user then requests media information using the user interface terminal 20 of his/her user terminal in the same way as was conducted in Fig. 5. The media information request is transmitted to the content provider 40, which returns the media information that is displayed on a display screen on the user terminal 20. The user selecting one of preferably multiple available media contents from the displayed web page, e.g. by clicking on a hyper link in the web page. The user-triggered link clicking generates and transmits a media request comprising the link or media content identifier and an identifier of the user. The media request is destined for the content provider but is intercepted by the request redirecting module (RRM) in this embodiment.

The request redirecting module retrieves the user identifier and the link from the media request and redirects them in the form of an activation command to the dialog generator of the device selecting module. The following signaling in Fig. 8 is conducted as described above in connection with Fig. 5.

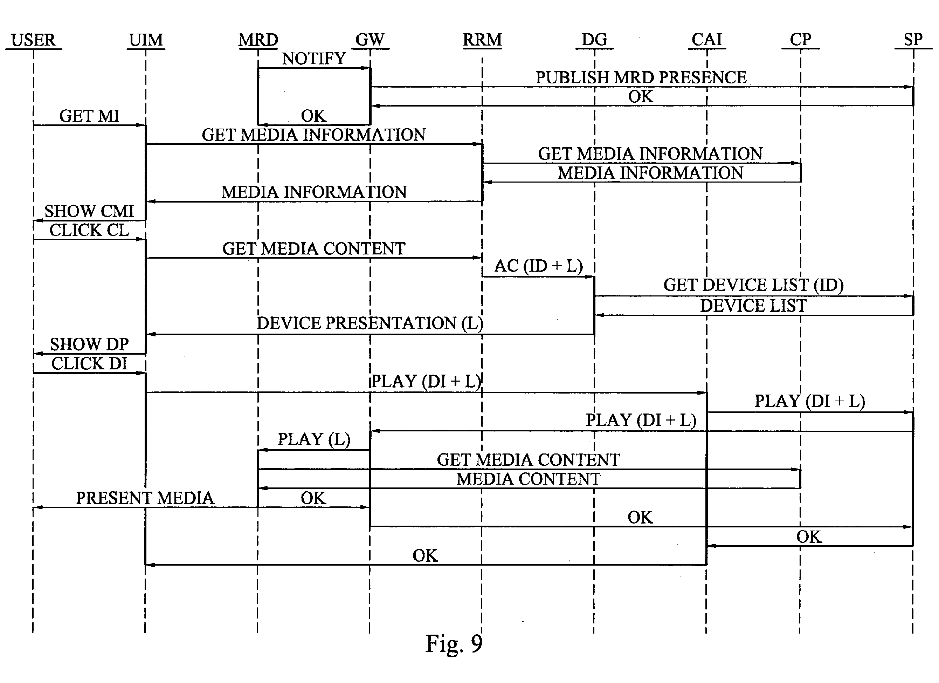

In the implementation example of Fig. 8, the request redirect module, the dialog generator and the control API invoker are preferably all implemented in the user terminal. In an alternative implementation example as illustrated in Fig. 9, the request redirect module is instead implemented in a request proxy e.g. as illustrated in Fig. 3. The signaling is preferably started in the same way as in Fig. 8. However, in this case the request of media information from the user interface module is routed through the request redirecting module to the content provider 40. The media information is correspondingly routed through the request redirecting module to the user interface module. The remaining signaling of Fig. 9 is conducted as illustrated in Fig. 8.

The implementation examples of Figs. 5, 6 and 8, 9 have a dialog generator that generates a device presentation that is displayed for the user for the purpose of selecting the media rendering device to which the media content should be delivered. In alternative implementation examples, an automatic selection of media rendering device is instead conducted, thereby relaxing the need for displaying information of available media rendering devices to the user.

The automatic device selection can be conducted according to various embodiments. For instance, the user can previously have logged into his/her account at the service provider to thereby get access to the list of media rendering devices available for the user at the local network. The user can then preselect one or more of the media rendering devices by notifying which media rendering device that he/she prefers. The pre-selecting is preferably also content-specific. Thus, the user selects which media rendering device from the list that he/she prefers for media content of a first content type, such as video, and then similarly selects preferred media rendering device for a second and optionally further content types, such as audio.

Automatic device selection can also be achieved without any explicit selection by the user. Each media rendering device has certain capabilities in terms of acceptable content type, codecs, etc. In such a case, information of the selected media content can be matched with the capabilities of the listed media rendering devices. It could then be possible that only one of the media rendering devices can actually correctly process, i.e. decode and render, the particular media content. No user-involvement is therefore needed in the device selection.

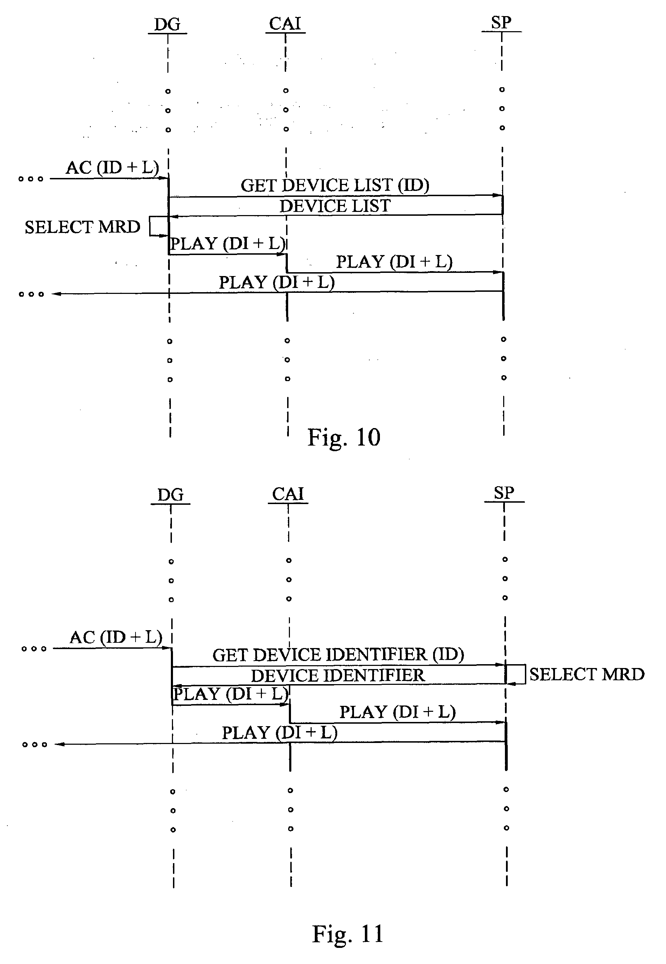

Fig. 10 is a flow diagram illustrating a part of the signaling that can occur in the case of an automatic device selection. The signaling as illustrated in Fig. 10 can be applied to any of the implementation examples illustrated in Figs. 5, 6, 8 and 9. The signaling starts by receiving the activation command from the user interface module (Figs. 5, 6) or the request redirecting module (Figs. 8, 9) at the dialog generator. The identifier of the user included in the activation command is used for composing a device identifier request that is transmitted to the service provider 30. The service provider 30 uses the user identifier in the request for identifying the particular media rendering devices that are available for the user. A list of information and preferably the identifiers of the media rendering devices is returned to the dialog generator. Instead of generating a device presentation, the dialog generator instead performs an automatic selection of one of the media rendering devices in the list as discussed above. If the selection is performed based on pre-defined user preferences, information of such preferences is also transmitted by the service provider 30 to the dialog generator. The dialog generator can also determine the particular type and preferably codec requirements of the media content from the link that was received in the activation command.

Once a media rendering device has been selected, the dialog generator transmits a device identifier associated with the selected media rendering device and the link to the control API invoker. The remaining signaling is conducted as illustrated in Figs. 5, 6, 8 and 9.

Fig. 11 is an alternative implementation of the automatic device selection. In this case, the service provider 30 and not the dialog generator performs the selection of the media rendering device. If the selection is at least partly based on media content type/codec requirements, the device identifier request from the dialog generator preferably comprises not only the identifier of the user but also the link or other information of the selected media content. Instead of returning a device list, the service provider 30 returns the device identifier of the selected media rendering device. The remaining signaling is performed as illustrated in Fig. 10.

In the foregoing, the user-conducted or automatic selection of media rendering device has been disclosed in connection with selecting a media rendering device present in a local network. It is anticipated by the embodiments, that the user can have access to media rendering devices present in multiple local networks. Therefore, the list of available media rendering devices can comprise such devices from one or more local networks.

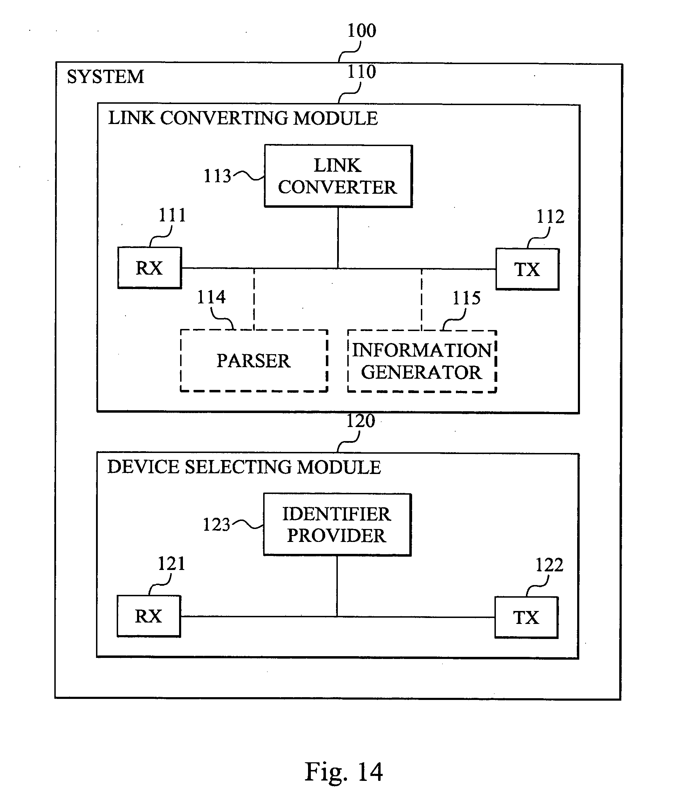

Fig. 14 is a schematic block diagram of an embodiment of a system 100 for enabling media rendering at a media rendering device available for a user and present in a local network connected to a global network. In the illustrated embodiment, the system 100 comprises two main modules: a link converting module, processor or device 110 and a device selecting module, processor or device 120.

The link converting module 110 in turn comprises functionality for communicating with external devices and modules. In the figure, this functionality has been exemplified by a receiver 111 and a transmitter 112. According to the present disclosure, a receiver 111 encompasses any unit or functionality allowing the link converting module 110 to receive information from at least one other module or device. The receiver 111 can consequently be a dedicated receiver unit, a receiving branch of a transceiver or indeed a general input unit or functionality. Correspondingly, the transmitter 112 represents any functionality or unit, such as dedicated transmitter, transmitting branch of a transceiver or a general output unit or functionary, that is capable of transmitting information to at least one other module or device.

The receiver 111 is in particular implemented to receive media information relating to a media content available at a content provider connected to the global network. The media information can be received from a user interface module implemented in a user terminal employed for selecting media content from the content provider. Alternatively, the media information is intercepted by the link converting module 100 in its transmission pathway from the content provider to the user interface module in the user terminal. As has previously been described, the media information comprises at least one link or other address information to the media content at the content provider.

A link converter 113 is configured in the link converting module 110 to convert the links in the media information into converted links that are destined to the device selecting module 120 instead of to the content provider. The link converter 113 can advantageously be configured to convert hyper links in the media information with corresponding Javascript function calls comprising information or indeed a copy of the corresponding hyper link.

The link converting module 110 may optionally comprise a parser 114 configured to parse through the media information received by the receiver 111 for the purpose of identifying any links to media content. The link converter 113 then operates on the identified links by replacing them with corresponding converted links that are directed towards the device selecting module 120 but comprises information of the original link. An optional information generator 115 generates converted media information by replacing the original links in the media information with the converted links from the link converter 113.

The transmitter 112 of the link converting module 110 transmits the converted media information to the user interface module implemented in the user terminal to enable display of the converted media information for the user on a display screen of the user terminal.

Once the user has selected a particular media content by activating a converted link in the displayed media information, an activation command is automatically generated by the user interface module and is transmitted to a receiver 121 of the device selecting module 120. The received activation command comprises the link corresponding to the activated converted link and a user identifier. An identifier provider 123 of the device selecting module 120 uses the user identifier in order to provide a device identifier of a selected media rendering device available for the user in the local network.

A media fetching command is generated by the device selecting module 120, such as by the previously mentioned control API invoker, and is transmitted by a transmitter 122 towards the selected media rendering device. The media fetching command comprises the link and the device identifier from the identifier provider 123.

Once the link reaches the media rendering device in the local network, the device can fetch the media content from the content provider to achieve rendering thereof at the media rendering device.

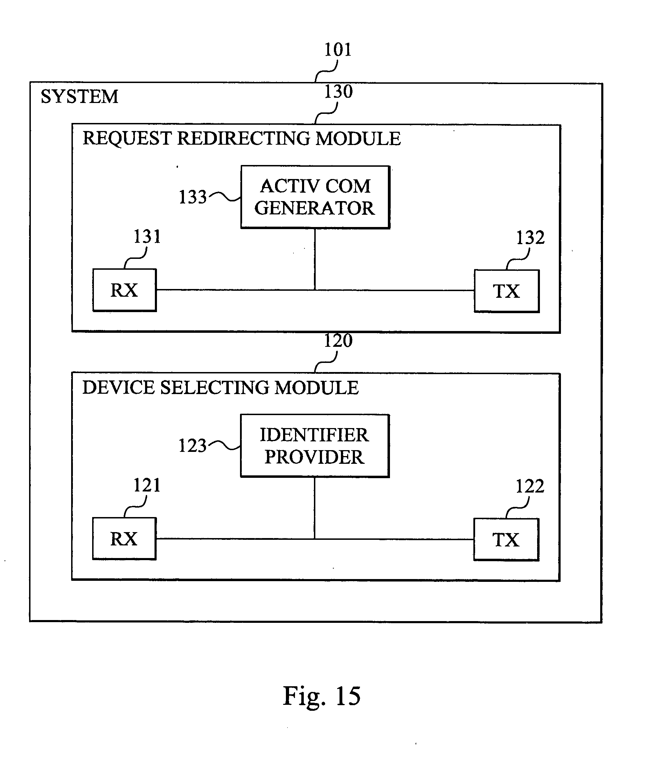

Fig. 15 is a schematic block diagram of another embodiment of a system 101 for enabling media rendering at a media rendering device available for the user and present in the local network. The system 101 comprises a request redirecting module, processor or device 130 instead of the link converting module of Fig. 14. The request redirecting module 130 comprises a receiver 131 configured to intercept a media request from the user interface module in the user terminal as it is transmitted towards the content provider. The intercepted media request comprises a link to a selected media content available at the content provider and a user identifier.

An activation command generator 133 generates an activation command based on the link and the user identifier. The activation command with the link and the user identifier is transmitted by a transmitter 132 to the receiver 121 of the device selecting module 120. The device selecting module 120 then processes the activation command in the same way as for the embodiment illustrated in Fig. 14.

With reference to Figs. 14 and 15, the device selecting module 120 and optionally the dialog generator of the device selecting module 120 preferably generates a device identifier request based on the user identifier received in the activation command. The device identifier request is transmitted by the transmitter 122 to a device registering server or service provider connected to the global network. In an embodiment, the device registering server provides a list of device identifiers associated with media rendering devices registered at the device registering server as being accessible to the user identified by the user identifier. The list of device identifiers is returned to the device selecting module 120, where the identifier provider 123 provides the device identifier of the selected media rendering device.

In a preferred implementation, the device selecting module 120 and preferably the previously mentioned dialog generator of the device selecting module 120 generates a device presentation message comprising information, such as device identifiers, of the multiple media rendering devices. The device presentation message is transmitted by the transmitter 122 to the user interface module for presentation on the display screen to the user. The user selects one of the presented media rendering devices as the preferred device for the current media content. The user interface module thereby transmits the device identifier of the selected media rendering device to the receiver 121 of the device selecting module 120. The received device identifier is brought to the identifier provider 123 that generates the media fetching command based on the device identifier.

In an alternative embodiment, the device identifier request is generated and transmitted to the device registering server together with information of the media type of the media content associated with the link. The data registering server performs an automatic selection of media rendering device based on the user identifier and the media type. The device identifier of the selected media rendering device is returned to the device selecting module 120 and the identifier provider 123.

Yet an alternative approach requests the list of device identifiers from the device registering server as previously described. The media rendering device to use for the present media content is then automatically selected by the device selecting module among the returned listed media rendering devices. The device selecting module 120 preferably uses media type and/or user preferences received from the device registering server in selecting one of the multiple available media rendering devices.

In all these embodiments, once the device identifier of the selected media rendering device is available to the identifier provider 123, the media fetching command is generated to include the device identifier and the link to the media content at the content provider. The media fetching command is transmitted to a media control server or service provider connected to the global network and is then forwarded therefrom to the selected media rendering device in the local network.

The link converting module illustrated in Fig. 14 and the request redirecting module in Fig. 15 can be implemented as add-on modules to the user interface module implemented in the user terminal.

Add-ons for user interface modules, such as web browsers, is a well established concept which enables distribution of a plug-in software or program components which extend the ability of the web browsers [1]. Additionally, there are also add-ons which enable installation and running a script when a specified web site is loaded. An example of such an add-on is Greasemonkey [2].

In such a case, the link converting module or the request redirecting module can be implemented as a web browser add-on or a script run in, for instance, Greasemonkey. The link converting module/request redirecting module is then loaded and triggered to perform the previously described operations when the web browser finishes loading a web site or page.

Also the device selecting module can be included in the add-on or implemented in one or more Javascript library files, which are loaded on-demand. For instance, the link converting module can insert links to such Javascript library files when it operates as previously described:
<script type="text/javascript" src="script/device.js"></script>
<script type="text/javascript" src="script/assets.js"></script>
<!-INSERTED BY Device Selecting Module -->
<script type="text/javascript" src=http:/op.com/script/pn_ui.js></script>

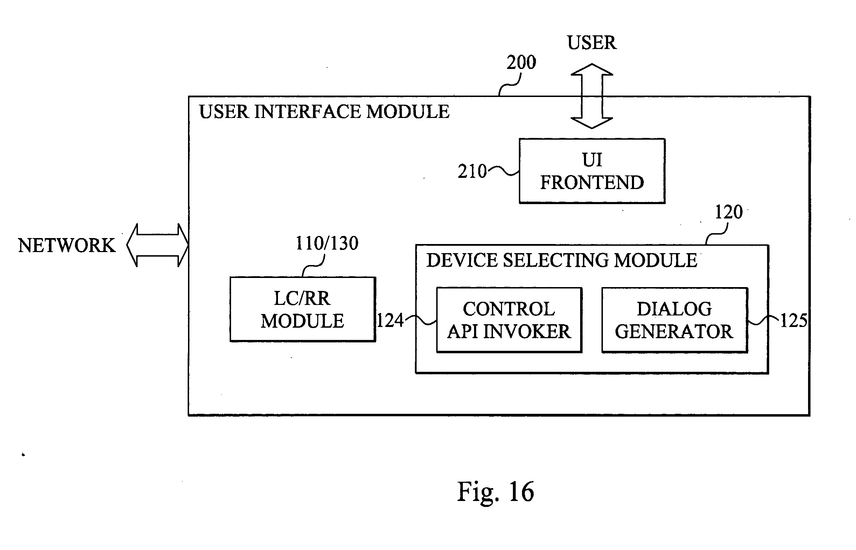

Fig. 16 is a schematic illustrating of an embodiment of a user interface module 200 implemented in a user terminal. The user interface module 200 is implemented by program code elements that define a web browser. The user interface module 200 can be regarded as comprising a user interface (UI) front-end 210 that comprises functionality for displaying web pages and other information in the web browser window at the display screen of the user terminal.

The user interface module 200 also comprises the link converting (LC) module 110 or the request redirecting (RR) module 130 preferably implemented by the add-on framework or user generated script engine.

The device selecting module 120 may optionally be regarded as constituting the previously mentioned dialog generator 125 and the control API invoker 124. The device selecting module 120 is preferably implemented by a script execution engine.

The illustrated implementation example of Fig. 16 using web browser add-ons does not require any investment in the network infrastructure or the server side. End-users can easily download and install the add-on modules for web browsers from a web site or add-on software repository.

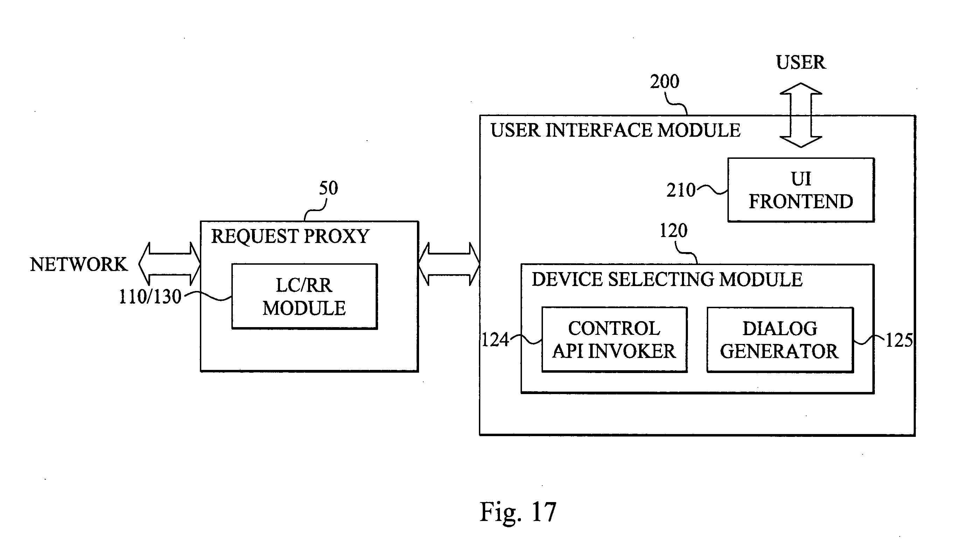

In an alternative implementation example as illustrated in Fig. 17, the link converting module 110 or the request redirecting module 130 is implemented in a request proxy 50, e.g. a HTTP proxy to thereby let it intercept traffic between the user interface module and content providers.

The device selecting module 120 with the preferred dialog generator 125 and the control API invoker 124 can be installed in the same way as discussed above in connection with Fig. 16.

A proxy-based implementation of the link converting module/request redirecting module does not require installing an add-on for each and every user terminal and user interface module available for the user. The proxy-based implementation instead requires investment in the network infrastructure or at the server side, depending on the placement of the request proxy in the communication system. It though has the advantage of not requiring any software installation in the user terminal.

Regardless of implementation site embodiments as disclosed herein allow a user to direct media contents on any arbitrary web site to media rendering devices instead of playing the media content on a computer or mobile telephone which runs the web browser. As a consequence, any media content can be distributed to user homes and local networks without requiring investments in infrastructure of the content providers.

The units 110 to 133 of the system 100, 101 may be implemented or provided as software, hardware or a combination thereof. In the case of a software-based implementation, a computer program product implementing the system 100, 101 or a part thereof comprises software or a computer program run on a general purpose or specially adapted computer, processor or microprocessor. The software includes computer program code elements or software code portions illustrated in Figs. 14 and 15. The program may be stored in whole or part, on or in one or more suitable computer readable media or data storage means such as magnetic disks, CD-ROMs, DVD disks, USB memories, hard discs, magneto-optical memory, in RAM or volatile memory, in ROM or flash memory, as firmware, or on a data server.

A distributed implementation is possible as illustrated in Fig. 17 or the units may all be implemented in the same user terminal, preferably as computer program components in terms of add-ons or scripts to the user interface module implemented in the user terminal. In the case of a common implementation in the user terminal, the modules of the system may share input and output (I/O) functionalities. For instance, the receivers and transmitters illustrated in Figs. 14 and 15 could represent general I/O functionalities that call different software modules run in the web browser environment or otherwise in the user terminal.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

### REFERENCES

[1] Add-ons for Firefox - https://addons.mozilla.org/en-US/firefox/
[2] Greasemonkey Firefox add-on - https://addons.mozilla.org/en-US/firefox/addon/748

## Claims

1. A method of enabling media rendering at a media rendering device (12, 13, 14) available for a user and present in a local network (2) connected to a global network (3), said method comprising the steps of:
receiving, at a link converting module (110) connected to said global network (3), media information relating to a media content available at a content provider (40) connected to said global network (3), said media information comprising a hyper link to said media content at said content provider (40);
converting said hyper link into a converted hyper link directed towards a device selecting module (120);
transmitting, to a user interface module (200) implemented in a user terminal (20, 22) of said user and being connected to said global network (3), converted media information comprising said media information with said hyper link replaced by said converted hyper link;
receiving, at said device selecting module (120), an activation command comprising said hyper link and an identifier associated with said user, said activation command being automatically generated upon activation of said converted hyper link at said user interface module (200);
providing, at said device selecting module (120) and based on said identifier, a device identifier of a selected media rendering device (12) available for said user and present in said local network (2); and
transmitting a media fetching command comprising said hyper link and being destined to said selected media rendering device (12).

2. The method according to claim 1, further comprising:
parsing through said media information to identify any hyper links to media contents available at said content provider (40); and
generating said converted media information by replacing said hyper links with converted hyper links directed towards said device selecting module (120).

3. The method according to claim 1 or 2, wherein said converting step comprises converting a hyper link to said media content available at said content provider (40) with a Javascript function call comprising information of said hyper link.

4. A method of enabling media rendering at a media rendering device (12, 13, 14) available for a user and present in a local network (2) connected to a global network (3), said method comprising the steps of:
intercepting, at a request redirecting module (130) and from a user interface module (200) implemented in a user terminal (20, 22) of said user and being connected to said global network (3), a media request comprising a hyper link to a media content available at a content provider (40) connected to said global network (3) and an identifier of said user;
generating an activation command comprising said hyper link and said identifier;
transmitting said activation command to a device selecting module (120) connected to said global network (3);
providing, at said device selecting module (120) and based on said identifier, information of a selected media rendering device (12) available for said user and present in said local network (3); and
transmitting a media fetching command comprising said hyper link and being destined to said selected media rendering device (12).

5. The method according to claim 4, wherein said intercepting step comprises intercepting said media request originating from said user interface module (200) and being destined to said content provider (70).

6. The method according to any of the claims 1 to 5, wherein said providing step comprises providing, at said device selecting module (120) and based on said identifier, said device identifier of said selected media rendering device (12) available for said user out of multiple media rendering devices (12, 13, 14) present in said local network (2).

7. The method according to claim 6, wherein said providing step comprises:
providing, at said device selecting module (120) and based on said identifier, device identifiers of said multiple media rendering devices (12, 13, 14) available for said user and present in said local network (2);
transmitting, to said user interface module (200), a device presentation message comprising information of said multiple media rendering devices (12, 13, 14) and being generated based on said device identifiers; and
receiving, from said user interface module (200), said device identifier associated with said selected media rendering device (12) of said multiple media rendering devices (12, 13,14).

8. The method according to claim 7, wherein step of providing said device identifiers comprises:
transmitting a device identifier request generated based on said identifier to a device registering server (30) connected to said global network (3); and
receiving device identifiers of media rendering devices (12, 13, 14) registered for said user at said device registering server (30).

9. The method according to claim 6, wherein said providing step comprises:
transmitting a device identifier request generated based on said identifier and information of a media type of said media content associated with said hyper link; and
receiving said device identifier of said selected media rendering device (12) of said multiple media rendering devices (12, 13, 14) selected based on said information of said media type.

10. The method according to any of the claims 1 to 9, wherein said transmitting step comprises transmitting said media fetching command comprising said hyper link and a device identifier of said selected media rendering device (12) to a media control server (30) connected to said global network (3) to enable said media control server (30) to forward said hyper link to said selected media rendering device (12) associated with said device identifier and present in said local network (2).

11. A system (100) for enabling media rendering at a media rendering device (12, 13, 14) available for a user and present in a local network (2) connected to a global network (3), said system (100) comprising a link converting module (110) and a device selecting module (120), wherein said link converting module (110) comprises:
a receiver (111) configured to receive media information relating to a media content available at a content provider (40) connected to said global network (3), said media information comprising a hyper link to said media content at said content provider (40);
a link converter (113) configured to convert said hyper link into a converted hyper link directed towards said device selecting module; and
a transmitter (112) configured to transmit, to a user interface module (200) implemented in a user terminal (20, 22) of said user and being connected to said global network (3), converted media information comprising said media information with said hyper link replaced by said converted hyper link;
and wherein said device selecting module (120) comprises:
a receiver (121) configured to receive an activation command comprising said hyper link and an identifier associated with said user, said activation command being automatically generated upon activation of said converted hyper link at said user interface module (200);
an identifier provider (123) configured to provide, based on said identifier, a device identifier of a selected media rendering device (12) available for said user and present in said local network (2); a
a transmitter (122) configured to transmit a media fetching command comprising said hyper link and being destined to said selected media rendering device (12).

12. The system according to claim 11, wherein said link converting module (120) further comprises:
a parser (114) configured to parse through said media information to identify any hyper links to media contents available at said content provider (40); and
an information generator (115) configured to generate said converted media information by replacing said hyper links with converted hyper links to said device selecting module (120) and generated by said link converter (113).

13. The system according to claim 11 or 12, wherein said link converter (113) is configured to convert a hyper link to said media content available at said content provider (40) with a Javascript function call comprising information of said hyper link.

14. The system according to any of the claims 11 to 13, wherein said link converting module (110) and said device selecting module (120) are implemented as add-on modules to said user interface module (200) implemented in said user terminal (20, 22).

15. The system according to any of the claims 11 to 13, wherein said link converting module (110) is implemented in a request proxy (50) connected to said global network (3) and said device selecting module (120) is implemented as an add-on module to said user interface module (200) of said user terminal (20, 22).

16. A system (101) for enabling media rendering at a media rendering device (12, 13, 14) available for a user and present in a local network (2) connected to a global network (3), said system (101) comprising a request redirecting module (130) and a device selecting module (120), wherein said request redirecting module (130) comprises:
a receiver (131) configured to intercept, from a user interface module (200) implemented in a user terminal (20, 22) of said user and being connected to said global network (3), a media request comprising a hyper link to a media content available at a content provider (40) connected to said global network (3) and an identifier of said user;
an activation command generator (133) configured to generate an activation command comprising said hyper link and said identifier; and
a transmitter (131) configured to transmit said activation command to said device selecting module (120);
and wherein said device selecting module (120) comprises:
a receiver (121) configured to receive said activation command;
an identifier provider (123) configured to provide, based on said identifier, a device identifier of a selected media rendering device (12) available for said user and present in said local network (2); and
a transmitter (122) configured to transmit a media fetching command comprising said link and being destined to said selected media rendering device (12).

17. The system according to claim 16, wherein said request redirecting module (130) and said device selecting module (120) are implemented as add-on modules to said user interface module (200) implemented in said user terminal (20, 22).

18. The system according to claim 16, wherein said request redirecting module (130) is implemented in a request proxy (50) connected to said global network (3) and said device selecting module (120) is implemented as an add-on module to said user interface module (200) of said user terminal (20, 22).

19. The system according to any of the claims 11 to 18, wherein said identifier provider (123) is configured to provide, based on said identifier, said device identifier of said selected media rendering device (12) available for said user out of multiple media rendering devices (12,13, 14) present in said local network (2).

20. The system according to claim 19, wherein said transmitter (122) of said device selecting module (120) is configured to transmit a device identifier request generated based on said identifier to a device registering server (30) connected to said global network (3), said receiver (121) of said device selecting module (120) is configured to receive device identifiers of media rendering devices (12, 13, 14) registered for said user at said device registering server (30), and said identifier provider (123) is configured to provide said device identifier of said selected media rendering device (12) from said receiver (121) of said device selecting module (120).

21. The system according to claim 20, wherein said transmitter (122) of said device selecting module (120) is configured to transmit, to said user interface module (200), a device presentation message comprising information of said multiple media rendering devices (12, 13, 14) and being generated based on said device identifiers, said receiver (122) of said device selecting module (120) is configured to receive, from said user interface module (200), said device identifier associated with said selected media rendering device (12), and said identifier provider (123) is configured to provide said device identifier of said selected media rendering device (12) from said receiver (122) of said device selecting module (120).

22. The system according to claim 19, wherein said transmitter (122) of said device selecting module (120) is configured to transmit a device identifier request generated based on said identifier and information of a media type of said media content associated with said link, said receiver (121) of said device selecting module (120) is configured to receive a device identifier of said selected media rendering device (12) of said multiple media rendering devices (12, 13, 14) selected based on said information of said media type, and said identifier provider (123) is configured to provide said device identifier of said selected media rendering device (12) from said receiver (122) of said device selecting module (120).

23. The system according to any of the claims 11 to 22, wherein said transmitter (122) of said device selecting module (122) is configured to transmit said media fetching command comprising said hyper link and a device identifier of said selected media rendering device (12) to a media control server (30) connected to said global network (3) to enable said media control server (30) to forward said hyper link to said selected media rendering device (12) associated with said device identifier and present in said local network (2).

## Patentansprüche

1. Verfahren zur Ermöglichung der Medienwiedergabe in einem Medienwiedergabegerät (12, 13, 14), das für einen Benutzer verfügbar ist und das in einem lokalen Netz (2) vorhanden ist, das mit einem globalen Netz (3) verbunden ist, wobei das Verfahren die folgenden Schritte umfasst:
in einem mit dem globalen Netz (3) verbundenen Linkumsetzungsmodul (110) erfolgendes Empfangen der Medieninformation bezüglich eines Medieninhalts, der in einem mit dem globalen Netz (3) verbundenen Inhalts-Provider (40) verfügbar ist, wobei die Medieninformation einen Hyperlink zu dem Medieninhalt in dem Inhalts-Provider (40) umfasst;
Umsetzen des Hyperlinks in einen umgesetzten Hyperlink, der an ein Geräteauswahlmodul (120) gerichtet ist;
Übertragen von umgesetzter Medieninformation, die die Medieninformation umfasst, in der der Hyperlink durch den umgesetzten Hyperlink ersetzt ist, an ein Benutzerschnittstellenmodul (200), das in einem Benutzerendgerät (20, 22) des Benutzers implementiert ist und das mit dem globalen Netz (3) verbunden ist;
in dem Geräteauswahlmodul (120) erfolgendes Empfangen eines Aktivierungsbefehls, der den Hyperlink und eine dem Benutzer zugeordnete Kennung umfasst, wobei der Aktivierungsbefehl bei Aktivierung des umgesetzten Hyperlinks in dem Benutzerschnittstellenmodul (200) automatisch erzeugt wird;
in dem Geräteauswahlmodul (120) und auf der Grundlage der Kennung erfolgendes Beschaffen einer Gerätekennung eines ausgewählten Medienwiedergabegeräts (12), das für den Benutzer verfügbar ist und das in dem lokalen Netz (2) vorhanden ist; und
Übertragen eines Medienabrufbefehls, der den Hyperlink umfasst und der für das ausgewählte Medienwiedergabegerät (12) bestimmt ist.

2. Verfahren nach Anspruch 1, ferner umfassend:
syntaxanalytisches Durchsuchen der Medieninformation, um jegliche Hyperlinks zu Medieninhalten zu identifizieren, die in dem Inhalts-Provider (40) verfügbar sind; und
Erzeugen der umgesetzten Medieninformation durch Ersetzen der Hyperlinks durch umgesetzte Hyperlinks, die an das Geräteauswahlmodul (120) gerichtet sind.

3. Verfahren nach Anspruch 1 oder 2, wobei der Umsetzungsschritt umfasst: Umsetzen eines Hyperlinks zu dem Medieninhalt in dem Inhalts-Provider (40) mit einem JavaScript-Funktionsaufruf, der Information über den Hyperlink umfasst.

4. Verfahren zur Ermöglichung der Medienwiedergabe in einem Medienwiedergabegerät (12, 13, 14), das für einen Benutzer verfügbar ist und das in einem mit einem globalen Netz (3) verbundenen lokalen Netz (2) vorhanden ist, wobei das Verfahren die folgenden Schritte umfasst:
Erfassen einer Medienanforderung, die einen Hyperlink zu einem Medieninhalt, der in einem mit dem globalen Netz (3) verbundenen Inhalts-Provider (40) verfügbar ist, und eine Kennung des Benutzers umfasst, in einem Anforderungsweiterleitungsmodul (130) und von einem Benutzerschnittstellenmodul (200) kommend, das in einem Benutzerendgerät (20, 22) des Benutzers implementiert ist und das mit dem globalen Netz (3) verbunden ist;
Erzeugen eines Aktivierungsbefehls, der den Hyperlink und die Kennung umfasst;
Übertragen des Aktivierungsbefehls an ein Geräteauswahlmodul (120), das mit dem globalen Netz (3) verbunden ist;
in dem Geräteauswahlmodul (120) und auf der Grundlage der Kennung erfolgendes Beschaffen von Information über ein ausgewähltes Medienwiedergabegerät (12), das für den Benutzer verfügbar ist und das in dem lokalen Netz (3) vorhanden ist; und
Übertragen eines Medienabrufbefehls, der den Hyperlink umfasst und der für das ausgewählte Medienwiedergabegerät (12) bestimmt ist.

5. Verfahren nach Anspruch 4, wobei der Erfassungsschritt umfasst: Erfassen der Medienanforderung, die von dem Benutzerschnittstellenmodul (200) abgeht und an den Inhalts-Provider (70) gerichtet ist.

6. Verfahren nach einem der Ansprüche 1 bis 5, wobei der Beschaffungsschritt umfasst: in dem Geräteauswahlmodul (120) und auf der Grundlage der Kennung erfolgendes Beschaffen der Gerätekennung des ausgewählten Medienwiedergabegeräts (12), das von mehreren in dem lokalen Netz (2) vorhandenen Medienwiedergabegeräten (12, 13, 14) für den Benutzer verfügbar ist.

7. Verfahren nach Anspruch 6, wobei der Beschaffungsschritt umfasst:
in dem Geräteauswahlmodul (120) und auf der Grundlage der Kennung erfolgendes Beschaffen von Gerätekennungen der mehreren Medienwiedergabegeräte (12, 13, 14), die für den Benutzer verfügbar sind und die in dem lokalen Netz (2) vorhanden sind;
an das Benutzerschnittstellenmodul (200) erfolgendes Übertragen einer Gerätedarstellungsnachricht, die Information über die mehreren Medienwiedergabegeräte (12, 13, 14) umfasst und die auf der Grundlage der Gerätekennungen erzeugt wird; und
Empfangen der Gerätekennung, die dem ausgewählten Medienwiedergabegerät (12) der mehreren Medienwiedergabegeräte (12, 13, 14) zugeordnet ist, von dem Benutzerschnittstellenmodul (200).

8. Verfahren nach Anspruch 7, wobei der Schritt des Beschaffens der Gerätekennungen umfasst:
Übertragen einer Gerätekennungsanforderung, die auf der Grundlage der Kennung erzeugt wird, an einen Gerätregistrierungsserver (30), der mit dem globalen Netz (3) verbunden ist; und
Empfangen von Gerätekennungen von Medienwiedergabegeräten (12, 13, 14), die für den Benutzer in dem Geräteregistrierungsserver (30) registriert sind.

9. Verfahren nach Anspruch 6, wobei der Beschaffungsschritt umfasst:
Übertragen einer Gerätekennungsanforderung, die auf der Grundlage der Kennung und Information über einen Medientyp des Medieninhalts, dem der Hyperlink zugeordnet ist, erzeugt wird; und
Empfangen der Gerätekennung des ausgewählten Medienwiedergabegeräts (12) der mehreren Medienwiedergabegeräte (12, 13, 14), das auf der Grundlage der Information über den Medientyp ausgewählt ist.

10. Verfahren nach einem der Ansprüche 1 bis 9, wobei der Übertragungsschritt umfasst: Übertragen des Medienabrufbefehls, der den Hyperlink und eine Gerätekennung des ausgewählten Medienwiedergabegeräts (12) umfasst, an einen mit dem globalen Netz (3) verbundenen Mediensteuerungsserver (30), um zu ermöglichen, dass der Mediensteuerungsserver (30) den Hyperlink an das ausgewählte Medienwiedergabegerät (12) weiterleitet, dem die Gerätekennung zugeordnet ist und das in dem lokalen Netz (2) vorhanden ist.

11. System (100) zur Ermöglichung der Medienwiedergabe in einem Medienwiedergabegerät (12, 13, 14), das für einen Benutzer verfügbar ist und das in einem mit einem globalen Netz (3) verbundenen lokalen Netz (2) vorhanden ist, wobei das System (100) ein Linkumsetzungsmodul (110) und ein Geräteauswahlmodul (120) umfasst, wobei das Linkumsetzungsmodul (110) umfasst:
einen Empfänger (111), der dafür konfiguriert ist, Medieninformation bezüglich eines Medieninhalts zu empfangen, die in einem mit dem globalen Netz (3) verbundenen Inhalts-Provider (40) verfügbar ist, wobei die Medieninformation einen Hyperlink zu dem Medieninhalt in dem Inhalts-Provider (40) umfasst;
einen Linkumsetzer (113), der dafür konfiguriert ist, den Hyperlink in einen umgesetzten Hyperlink umzusetzen, der an das Geräteauswahlmodul gerichtet ist; und
einen Sender (112), der dafür konfiguriert ist, an ein Benutzerschnittstellenmodul (200), das in einem Benutzergerät (20, 22) des Benutzers implementiert ist und das mit dem globalen Netz (3) verbunden ist, umgesetzte Medieninformation zu übertragen, die die Medieninformation umfasst, in der der Hyperlink durch den umgesetzten Hyperlink ersetzt ist;
und wobei das Geräteauswahlmodul (120) umfasst:
einen Empfänger (121), der dafür konfiguriert ist, einen Aktivierungsbefehl zu empfangen, der den Hyperlink und eine dem Benutzer zugeordnete Kennung umfasst, wobei der Aktivierungsbefehl bei Aktivierung des umgesetzten Hyperlinks in dem Benutzerschnittstellenmodul (200) automatisch erzeugt wird;
einen Kennungs-Provider (123), der dafür konfiguriert ist, auf der Grundlage der Kennung eine Gerätekennung eines ausgewählten Medienwiedergabegeräts (12) zu beschaffen, das für den Benutzer verfügbar ist und das in dem lokalen Netz (2) vorhanden ist;
einen Sender (122), der dafür konfiguriert ist, einen Medienabrufbefehl zu übertragen, der den Hyperlink umfasst und an das ausgewählte Medienwiedergabegerät (12) gerichtet ist.

12. System nach Anspruch 11, wobei das Linkumsetzungsmodul (120) ferner umfasst:
einen Parser (114), der dafür konfiguriert ist, die Medieninformation syntaxanalytisch zu durchsuchen, um jegliche Hyperlinks zu Medieninhalten, die in dem Inhalts-Provider (40) verfügbar sind, zu identifizieren; und
einen Informationsgenerator (115), der dafür konfiguriert ist, die umgesetzte Medieninformation zu erzeugen durch Ersetzen der Hyperlinks durch umgesetzte Hyperlinks, gerichtet an das Geräteauswahlmodul (120) und erzeugt durch den Linkumsetzer (113).

13. System nach Anspruch 11 oder 12, wobei der Linkumsetzer (113) dafür konfiguriert ist, einen Hyperlink zu dem Medieninhalt, der in dem Inhalts-Provider (40) verfügbar ist, mit einem Javascript-Funktionsaufruf, der Information über den Hyperlink umfasst, umzusetzen.

14. System nach einem der Ansprüche 11 bis 13, wobei das Linkumsetzungsmodul (110) und das Geräteauswahlmodul (120) als Zusatzmodule zu dem in dem Benutzerendgerät (20, 22) implementierten Benutzerschnittstellenmodul (200) implementiert sind.

15. System nach einem der Ansprüche 11 bis 13, wobei das Linkumsetzungsmodul (110) in einem mit dem globalen Netz (3) verbundenen Anforderungsproxy (50) implementiert ist und das Geräteauswahlmodul (120) als Zusatzmodul zu dem Benutzerschnittstellenmodul (200) der Benutzerendgeräts (20, 22) implementiert ist.

16. System (101) zur Ermöglichung der Medienwiedergabe in einem Medienwiedergabegerät (12, 13, 14), das für einen Benutzer verfügbar ist und das in einem mit einem globalen Netz (3) verbundenen lokalen Netz (2) vorhanden ist, wobei das System (101) ein Anforderungsweiterleitungsmodul (130) und ein Geräteauswahlmodul (120) umfasst, wobei das Anforderungsweiterleitungsmodul (130) umfasst:
einen Empfänger (131), der dafür konfiguriert ist, von einem Benutzerschnittstellenmodul (200), das in einem Benutzergerät (20, 22) des Benutzers implementiert ist und das mit dem globalen Netz (3) verbunden ist, eine Medienanforderung zu erfassen, die einen Hyperlink zu einem Medieninhalt, der in einem mit dem globalen Netz (3) verbundenen Inhalts-Provider (40) verfügbar ist, und eine Kennung des Benutzers umfasst;
einen Aktivierungsbefehlsgenerator (133), der dafür konfiguriert, einen Aktivierungsbefehl zu erzeugen, der den Hyperlink und die Kennung umfasst; und
einen Sender (131), der dafür konfiguriert ist, den Aktivierungsbefehl an das Geräteauswahlmodul (120) zu übertragen;
und wobei das Geräteauswahlmodul (120) umfasst:
einen Empfänger (121), der dafür konfiguriert ist, den Aktivierungsbefehl zu empfangen;
einen Kennungs-Provider (123), der dafür konfiguriert ist, auf der Grundlage der Kennung eine Gerätekennung eines ausgewählten Medienwiedergabegeräts (12) zu beschaffen, das für den Benutzer verfügbar ist und das in dem lokalen Netz (2) vorhanden ist; und
einen Sender (122), der dafür konfiguriert ist, einen Medienabrufbefehl zu übertragen, der den Link umfasst und der für das ausgewählte Medienwiedergabegerät (12) bestimmt ist.

17. System nach Anspruch 16, wobei das Anforderungsweiterleitungsmodul (130) und das Geräteauswahlmodul (120) als Zusatzmodule zu dem in dem Benutzerendgerät (20, 22) implementierten Benutzerschnittstellenmodul (200) implementiert sind.

18. System nach Anspruch 16, wobei das Anforderungsweiterleitungsmodul (130) in einem mit dem globalen Netz (3) verbundenen Anforderungsproxy (50) implementiert ist und das Geräteauswahlmodul (120) als Zusatzmodul zu dem Benutzerschnittstellenmodul (200) der Benutzerendgeräts (20, 22) implementiert ist.

19. System nach einem der Ansprüche 11 bis 18, wobei der Kennungs-Provider (123) dafür konfiguriert ist, auf der Grundlage der Kennung die Gerätekennung des ausgewählten Medienwiedergabegeräts (12) zu beschaffen, das von mehreren Medienwiedergabegeräten (12, 13, 14) in dem lokalen Netz (2) für den Benutzer verfügbar ist.

20. System nach Anspruch 19, wobei der Sender (122) des Geräteauswahlmoduls (120) dafür konfiguriert ist, eine auf der Grundlage der Kennung erzeugte Gerätekennungsanforderung an einen mit dem globalen Netz (3) verbundenen Geräteregistrierungsserver (30) zu übertragen, wobei der Empfänger (121) des Geräteauswahlmoduls (120) dafür konfiguriert ist, Gerätekennungen von Medienwiedergabegeräten (12, 13, 14) zu empfangen, die für den Benutzer im Geräteregistrierungsserver (30) registriert sind, und der Kennungs-Provider (123) dafür konfiguriert ist, die Gerätekennung, des ausgewählten Medienwiedergabegeräts (12) von dem Empfänger (121) des Geräteauswahlmoduls (120) zu beschaffen.

21. System nach Anspruch 20, wobei der Sender (122) des Geräteauswahlmoduls (120) dafür konfiguriert ist, an das Benutzerschnittstellenmodul (200) eine Gerätedarstellungsnachricht zu übertragen, die Information über die mehreren Medienwiedergabegeräte (12, 13, 14) umfasst und die auf der Grundlage der Gerätekennungen erzeugt wird, der Empfänger (122) des Geräteauswahlmoduls (120) dafür konfiguriert ist, von dem Benutzerschnittstellenmodul (200) die dem ausgewählten Medienwiedergabegerät (12) zugeordnete Gerätekennung zu empfangen, und der Kennungs-Provider (123) dafür konfiguriert ist, die Gerätekennung des ausgewählten Medienwiedergabegeräts (12) von dem Empfänger (122) des Geräteauswahlmoduls (120) zu beschaffen.

22. System nach Anspruch 19, wobei der Sender (122) des Geräteauswahlmoduls (120) dafür konfiguriert ist, eine Gerätekennungsanforderung zu übertragen, die auf der Grundlage der Kennung und Information über einen Medientyp des dem Link zugeordneten Medieninhalts erzeugt wird, der Empfänger (121) des Geräteauswahlmoduls (120) dafür konfiguriert ist, eine Gerätekennung des ausgewählten Medienwiedergabegeräts (12) der mehreren Medienwiedergabegeräten (12, 13. 14) zu empfangen, das auf der Grundlage der Information über den Medientyp ausgewählt ist, und der Kennungs-Provider (123) dafür konfiguriert ist, die Gerätekennung des ausgewählten Medienwiedergabegeräts (12) von dem Empfänger (122) des Geräteauswahlmoduls (120) zu beschaffen.

23. System nach einem der Ansprüche 11 bis 22, wobei der Sender (122) des Geräteauswahlmoduls (122) dafür konfiguriert ist, den Medienabrufbefehl, der den Hyperlink und eine Gerätekennung des ausgewählten Medienwiedergabegeräts (12) umfasst, an einen mit dem globalen Netz (3) verbundenen Mediensteuerungsserver (30) zu übertragen, um zu ermöglichen, dass der Mediensteuerungsserver (30) den Hyperlink an das ausgewählte Medienwiedergabegerät (12) weiterleitet, dem die Gerätekennung zugeordnet ist und das in dem lokalen Netz (2) vorhanden ist.

## Revendications

1. Procédé d'activation de rendu multimédia au niveau d'un dispositif de rendu multimédia (12, 13, 14) à disposition d'un utilisateur et présent dans un réseau local (2) connecté à un réseau mondial (3), ledit procédé comprenant les étapes ci-dessous consistant à :
recevoir, au niveau d'un module de conversion de liens (110) connecté audit réseau mondial (3), des informations multimédias connexes à un contenu multimédia disponible au niveau d'un fournisseur de contenu (40) connecté audit réseau mondial (3), lesdites informations multimédias comprenant un lien hypertexte pointant vers ledit contenu multimédia au niveau dudit fournisseur de contenu (40) ;
convertir ledit lien hypertexte en un lien hypertexte converti pointant vers un module de sélection de dispositifs (120) ;
transmettre, à un module d'interface utilisateur (200) mis en oeuvre dans un terminal d'utilisateur (20, 22) dudit utilisateur, et qui est connecté audit réseau mondial (3), des informations multimédias converties comprenant lesdites informations multimédias, avec ledit lien hypertexte remplacé par ledit lien hypertexte converti ;
recevoir, au niveau dudit module de sélection de dispositifs (120), une commande d'activation comprenant ledit lien hypertexte et un identifiant associé audit utilisateur, ladite commande d'activation étant générée automatiquement suite à l'activation dudit lien hypertexte converti au niveau dudit module d'interface utilisateur (200) ;
fournir, au niveau dudit module de sélection de dispositifs (120) et sur la base dudit identifiant, un identifiant de dispositif d'un dispositif de rendu multimédia sélectionné (12) à disposition dudit utilisateur et présent dans ledit réseau local (2) ; et
transmettre une commande de récupération multimédia comprenant ledit lien hypertexte et destinée audit dispositif de rendu multimédia sélectionné (12).

2. Procédé selon la revendication 1, consistant en outre à :
analyser lesdites informations multimédias en vue d'identifier des quelconques liens hypertextes pointant vers des contenus multimédias disponibles au niveau dudit fournisseur de contenu (40) ; et
générer lesdites informations multimédias converties en remplaçant lesdits liens hypertextes par des liens hypertextes convertis pointant vers ledit module de sélection de dispositifs (120).

3. Procédé selon la revendication 1 ou 2, dans lequel ladite étape de conversion consiste à convertir un lien hypertexte pointant vers ledit contenu multimédia disponible au niveau dudit fournisseur de contenu (40), avec un appel de fonction JavaScript comprenant des informations dudit lien hypertexte.

4. Procédé d'activation de rendu multimédia au niveau d'un dispositif de rendu multimédia (12, 13, 14) à disposition d'un utilisateur et présent dans un réseau local (2) connecté à un réseau mondial (3), ledit procédé comprenant les étapes ci-dessous consistant à :
intercepter, au niveau d'un module de redirection de demandes (130), et à partir d'un module d'interface utilisateur (200) mis en oeuvre dans un terminal d'utilisateur (20, 22) dudit utilisateur, et qui est connecté audit réseau mondial (3), une demande multimédia comprenant un lien hypertexte pointant vers un contenu multimédia disponible au niveau d'un fournisseur de contenu (40) connecté audit réseau mondial (3) et un identifiant dudit utilisateur ;
générer une commande d'activation comprenant ledit lien hypertexte et ledit identifiant ;
transmettre ladite commande d'activation à un module de sélection de dispositifs (120) connecté audit réseau mondial (3) ;
fournir, au niveau dudit module de sélection de dispositifs (120), et sur la base dudit identifiant, des informations d'un dispositif de rendu multimédia sélectionné (12) à disposition dudit utilisateur et présent dans ledit réseau local (3) ; et
transmettre une commande de récupération multimédia comprenant ledit lien hypertexte, et qui est destinée audit dispositif de rendu multimédia sélectionné (12).

5. Procédé selon la revendication 4, dans lequel ladite étape d'interception consiste à intercepter ladite demande multimédia provenant dudit module d'interface utilisateur (200) et qui est destinée audit fournisseur de contenu (70).

6. Procédé selon l'une quelconque des revendications 1 à 5, dans lequel ladite étape de fourniture consiste à fournir, au niveau dudit module de sélection de dispositifs (120) et sur la base dudit identifiant, ledit identifiant de dispositif dudit dispositif de rendu multimédia sélectionné (12) à disposition dudit utilisateur, parmi de multiples dispositifs de rendu multimédia (12, 13, 14) présents dans ledit réseau local (2).

7. Procédé selon la revendication 6, dans lequel ladite étape de fourniture consiste à :
fournir, au niveau dudit module de sélection de dispositifs (120) et sur la base dudit identifiant, des identifiants de dispositifs desdits multiples dispositifs de rendu multimédia (12, 13, 14) à disposition dudit utilisateur et présents dans ledit réseau local (2) ;
transmettre, audit module d'interface utilisateur (200), un message de présentation de dispositif comprenant des informations desdits multiples dispositifs de rendu multimédia (12, 13, 14) et généré sur la base desdits identifiants de dispositifs ; et
recevoir, à partir dudit module d'interface utilisateur (200), ledit identifiant de dispositif associé audit dispositif de rendu multimédia sélectionné (12) desdits multiples dispositifs de rendu multimédia (12, 13, 14).

8. Procédé selon la revendication 7, dans lequel l'étape de fourniture desdits identifiants de dispositifs consiste à :
transmettre une demande d'identifiant de dispositif générée sur la base dudit identifiant, à un serveur d'enregistrement de dispositifs (30) connecté audit réseau mondial (3) ; et
recevoir des identifiants de dispositifs, de dispositifs de rendu multimédia (12, 13, 14) enregistrés pour ledit utilisateur au niveau dudit serveur d'enregistrement de dispositifs (30).

9. Procédé selon la revendication 6, dans lequel ladite étape de fourniture consiste à :
transmettre une demande d'identifiant de dispositif générée sur la base dudit identifiant et des informations d'un type de support multimédia dudit contenu multimédia associé audit lien hypertexte ; et
recevoir ledit identifiant de dispositif dudit dispositif de rendu multimédia sélectionné (12) desdits multiples dispositifs de rendu multimédia (12, 13,14) sélectionnés sur la base desdites informations dudit type de support multimédia.

10. Procédé selon l'une quelconque des revendications 1 à 9, dans lequel ladite étape de transmission consiste à transmettre ladite commande de récupération multimédia comprenant ledit lien hypertexte et un identifiant de dispositif dudit dispositif de rendu multimédia sélectionné (12), à un serveur de commande multimédia (30) connecté audit réseau mondial (3), en vue de permettre audit serveur de commande multimédia (30) d'acheminer ledit lien hypertexte audit dispositif de rendu multimédia sélectionné (12) associé audit identifiant de dispositif et présent dans ledit réseau local (2).

11. Système (100) d'activation de rendu multimédia au niveau d'un dispositif de rendu multimédia (12, 13, 14) à disposition d'un utilisateur et présent dans un réseau local (2) connecté à un réseau mondial (3), ledit système (100) comprenant un module de conversion de liens (110) et un module de sélection de dispositifs (120), dans lequel ledit module de conversion de liens (110) comporte :
un récepteur (111) configuré de manière à recevoir des informations multimédias connexes à un contenu multimédia disponible au niveau d'un fournisseur de contenu (40) connecté audit réseau mondial (3), lesdites informations multimédias comprenant un lien hypertexte pointant vers ledit contenu multimédia au niveau dudit fournisseur de contenu (40) ;
un convertisseur de liens (113) configuré de manière à convertir ledit lien hypertexte en un lien hypertexte converti pointant vers ledit module de sélection de dispositifs ;
un émetteur (112) configuré de manière à transmettre, à un module d'interface utilisateur (200) mis en oeuvre dans un terminal d'utilisateur (20, 22) dudit utilisateur, et qui est connecté audit réseau mondial (3), des informations multimédias converties comprenant lesdites informations multimédias, avec ledit lien hypertexte remplacé par ledit lien hypertexte converti ; et
dans lequel ledit module de sélection de dispositifs (120) comporte :
un récepteur (121) configuré de manière à recevoir une commande d'activation comprenant ledit lien hypertexte et un identifiant associé audit utilisateur, ladite commande d'activation étant générée automatiquement suite à l'activation dudit lien hypertexte converti au niveau dudit module d'interface utilisateur (200) ;
un fournisseur d'identifiants (123) configuré de manière à fournir, sur la base dudit identifiant, un identifiant de dispositif d'un dispositif de rendu multimédia sélectionné (12) à disposition dudit utilisateur et présent dans ledit réseau local (2) ; et
un émetteur (122) configuré de manière à transmettre une commande de récupération multimédia comprenant ledit lien hypertexte et destinée audit dispositif de rendu multimédia sélectionné (12).

12. Système selon la revendication 11, dans lequel ledit module de conversion de liens (120) comporte en outre :
un analyseur (114) configuré de manière à analyser lesdites informations multimédias en vue d'identifier des quelconques liens hypertextes pointant vers des contenus multimédias disponibles au niveau dudit fournisseur de contenu (40) ; et
un générateur d'informations (115) configuré de manière à générer lesdites informations multimédias converties, en remplaçant lesdits liens hypertextes par des liens hypertextes convertis pointant vers ledit module de sélection de dispositifs (120) et générés par ledit convertisseur de liens (113).

13. Système selon la revendication 11 ou 12, dans lequel ledit convertisseur de liens (113) est configuré de manière à convertir un lien hypertexte pointant vers ledit contenu multimédia disponible au niveau dudit fournisseur de contenu (40), avec un appel de fonction JavaScript comprenant des informations dudit lien hypertexte.

14. Système selon l'une quelconque des revendications 11 à 13, dans lequel ledit module de conversion de liens (110) et ledit module de sélection de dispositifs (120) sont mis en oeuvre en tant que modules complémentaires audit module d'interface utilisateur (200) mis en oeuvre dans ledit terminal d'utilisateur (20, 22).

15. Système selon l'une quelconque des revendications 11 à 13, dans lequel ledit module de conversion de liens (110) est mis en oeuvre dans un serveur mandataire de demandes (50) connecté audit réseau mondial (3), et ledit module de sélection de dispositifs (120) est mis en oeuvre en tant qu'un module complémentaire audit module d'interface utilisateur (200) dudit terminal d'utilisateur (20, 22).

16. Système (101) d'activation de rendu multimédia au niveau d'un dispositif de rendu multimédia (12, 13, 14) à disposition d'un utilisateur et présent dans un réseau local (2) connecté à un réseau mondial (3), ledit système (101) comprenant un module de redirection de demandes (130) et un module de sélection de dispositifs (120), dans lequel ledit module de redirection de demandes (130) comporte :
un récepteur (131) configuré de manière à intercepter, à partir d'un module d'interface utilisateur (200) mis en oeuvre dans un terminal d'utilisateur (20, 22) dudit utilisateur, et qui est connecté audit réseau mondial (3), une demande multimédia comprenant un lien hypertexte pointant vers un contenu multimédia disponible au niveau d'un fournisseur de contenu (40) connecté audit réseau mondial (3) et un identifiant dudit utilisateur ;
un générateur de commandes d'activation (133) configuré de manière à générer une commande d'activation comprenant ledit lien hypertexte et ledit identifiant ; et
un émetteur (131) configuré de manière à transmettre ladite commande d'activation audit module de sélection de dispositifs (120) ; et
dans lequel ledit module de sélection de dispositifs (120) comprend :
un récepteur (121) configuré de manière à recevoir ladite commande d'activation ;
un fournisseur d'identifiants (123) configuré de manière à fournir, sur la base dudit identifiant, un identifiant de dispositif d'un dispositif de rendu multimédia sélectionné (12) à disposition dudit utilisateur et présent dans ledit réseau local (2) ; et
un émetteur (122) configuré de manière à transmettre une commande de récupération multimédia comprenant ledit lien, et qui est destinée audit dispositif de rendu multimédia sélectionné (12).

17. Système selon la revendication 16, dans lequel ledit module de redirection de demandes (130) et ledit module de sélection de dispositifs (120) sont mis en oeuvre en tant que modules complémentaires audit module d'interface utilisateur (200) mis en oeuvre dans ledit terminal d'utilisateur (20, 22).

18. Système selon la revendication 16, dans lequel ledit module de redirection de demandes (130) est mis en oeuvre dans un serveur mandataire de demandes (50) connecté audit réseau mondial (3) et ledit module de sélection de dispositifs (120) est mis en oeuvre en tant qu'un module complémentaire audit module d'interface utilisateur (200) dudit terminal d'utilisateur (20, 22).

19. Système selon l'une quelconque des revendications 11 à 18, dans lequel ledit fournisseur d'identifiants (123) est configuré de manière à fournir, sur la base dudit identifiant, ledit identifiant de dispositif dudit dispositif de rendu multimédia sélectionné (12) à disposition dudit utilisateur, parmi de multiples dispositifs de rendu multimédia (12, 13, 14) présents dans ledit réseau local (2).

20. Système selon la revendication 19, dans lequel ledit émetteur (122) dudit module de sélection de dispositifs (120) est configuré de manière à transmettre une demande d'identifiant de dispositif générée sur la base dudit identifiant, à un serveur d'enregistrement de dispositifs (30) connecté audit réseau mondial (3), ledit récepteur (121) dudit module de sélection de dispositifs (120) est configuré de manière à recevoir des identifiants de dispositifs, de dispositifs de rendu multimédia (12, 13, 14) enregistrés pour ledit utilisateur au niveau dudit serveur d'enregistrement de dispositifs (30), et ledit fournisseur d'identifiants (123) est configuré de manière à fournir ledit identifiant de dispositif dudit dispositif de rendu multimédia sélectionné (12) à partir dudit récepteur (121) dudit module de sélection de dispositifs (120).

21. Système selon la revendication 20, dans lequel ledit émetteur (122) dudit module de sélection de dispositifs (120) est configuré de manière à transmettre, audit module d'interface utilisateur (200), un message de présentation de dispositif comprenant des informations desdits multiples dispositifs de rendu multimédia (12, 13, 14) et qui est généré sur la base desdits identifiants de dispositifs, ledit récepteur (122) dudit module de sélection de dispositifs (120) est configuré de manière à recevoir, à partir dudit module d'interface utilisateur (200), ledit identifiant de dispositif associé audit dispositif de rendu multimédia sélectionné (12), et ledit fournisseur d'identifiants (123) est configuré de manière à fournir ledit identifiant de dispositif dudit dispositif de rendu multimédia sélectionné (12), à partir dudit récepteur (122) dudit module de sélection de dispositifs (120).

22. Système selon la revendication 19, dans lequel ledit émetteur (122) dudit module de sélection de dispositifs (120) est configuré de manière à transmettre une demande d'identifiant de dispositif générée sur la base dudit identifiant et des informations d'un type de support multimédia dudit contenu multimédia associé audit lien, ledit récepteur (121) dudit module de sélection de dispositifs (120) est configuré de manière à recevoir un identifiant de dispositif dudit dispositif de rendu multimédia sélectionné (12) desdits multiples dispositifs de rendu multimédia (12, 13, 14) sélectionnés sur la base desdites informations dudit type de support multimédia, et ledit fournisseur d'identifiants (123) est configuré de manière à fournir ledit identifiant de dispositif dudit dispositif de rendu multimédia sélectionné (12) à partir dudit récepteur (122) dudit module de sélection de dispositifs (120).

23. Système selon l'une quelconque des revendications 11 à 22, dans lequel ledit émetteur (122) dudit module de sélection de dispositifs (122) est configuré de manière à transmettre ladite commande de récupération multimédia comprenant ledit lien hypertexte et un identifiant de dispositif dudit dispositif de rendu multimédia sélectionné (12), à un serveur de commande multimédia (30) connecté audit réseau mondial (3), en vue de permettre audit serveur de commande multimédia (30) d'acheminer ledit lien hypertexte audit dispositif de rendu multimédia sélectionné (12) associé audit identifiant de dispositif et présent dans ledit réseau local (2).
